# EUROPÄISCHE PATENTSCHRIFT

(11) **EP 0 827 986 B1**
(45) Veröffentlichungstag und Bekanntmachung des Hinweises auf die Patenterteilung: **27.03.2002**
(21) Anmeldenummer: 97114706.1
(22) Anmeldetag: 25.08.1997
(51) Int. Cl.: C09B 57/12, C09B 25/00, C08K 5/34, C07D 307/89, C07C 63/331

(54) **Verbrückte Perinone, Chinophthalone und Perinon-Chinophthalone**
Bridged perinone, quinophthalone and perinone-quinophthalone
Périnone, quinophtalone et périnone-quinophtalone pontées

(30) Priorität: 05.09.1996 DE 19636032; 05.09.1996 DE 19636033; 21.02.1997 DE 19706900
(43) Veröffentlichungstag der Anmeldung: 11.03.1998
(60) Teilanmeldung: 01107749.2
(73) Patentinhaber: BAYER AG, 51368 Leverkusen (DE)
(72) Erfinder: Kalz, Dietmar, Dr., 53819 Neunkirchen (DE); Arlt, Dieter, Prof. Dr., 51065 Köln (DE); Reinhardt, Karl-Heinz, 40789 Monheim (DE)

(56) Entgegenhaltungen:
- EP-A- 0 315 992
- EP-A- 0 438 382
- BE-A- 678 479
- CH-A- 463 667
- FR-A- 1 075 110
- FR-A- 1 564 232
- FR-A- 1 566 931
- FR-A- 2 116 431
- FR-A- 2 126 731
- FR-A- 2 369 323
- B.K MANUKIAN ET AL: "chinophthalone" CHIMIA, Bd. 24, Nr. 9, 1970, Seiten 328-339, XP002073520 aarau-ch
- PATENT ABSTRACTS OF JAPAN vol. 014, no. 020 (C-676), 17. Januar 1989 & JP 01 261462 A (MITSUI TOATSU CHEM INC), 18. Oktober 1989

## Beschreibung

Die Erfindung betrifft verbrückte Perinone, Chinophthalone und Perinon-Chinophthalone, Verfahren zu ihrer Herstellung sowie ihre Verwendung zum Massefärben von Kunststoffen.

Es ist bekannt, Perinonfarbstoffe, wie sie beispielsweise aus FR-A-1 075 110 oder US-A-5.466.805 bekannt sind, zum Massefärben von Kunststoffen zu verwenden.

Es ist außerdem bekannt, Chinophthalonfarbstoffe, wie sie beispielsweise in DE-A-44 35 714 oder DE-A-21 32 681 beschrieben sind, zum Massefärben von Kunststoffen einzusetzen.

Derartige Verbindungen zeichnen sich zwar durch eine gute Temperaturstabilität und hohe Lichtechtheit aus, dafür ist allerdings ihre Sublimierechtheit noch verbesserungswürdig. Beim Färbeverfahren, d.h. in den Spritzgußmaschinen, kommt es bei Temperaturen von über 240°C nicht selten zu einer unerwünschten Sublimation des Farbstoffes, wodurch das Arbeitsgerät verschmutzt wird, was aufwendige Reinigungsmaßnahmen erforderlich macht.

Aufgabe der vorliegenden Erfindung war es daher, Perinon- bzw. Chinophthalonfarbstoffe mit verbesserter Sublimierechtheit bereitzustellen.

Aus DE-A-169 44 12 und DE-A-215 75 47 sind über eine direkte Bindung verdoppelte Farbstoffe offenbart, die zum Massefärben von Polyester eingesetzt werden.

Gemäß CH-A-463667 werden Farbstoffe zum Massefärben von Kunststoffenverwendet, in denen sich der Mittelteil von einer Benzoltetracarbonsäure ableitet.

Auch in dem Abstract XP 002073520 zu B.K. Manukian et al, "Chinophthalone" Chimia, Bd. 24, Nr. 9, 1970, Seite 328 - 339 sind verdoppelte Farstoffe beschrieben.

Aus DE-A-156 96 70 sind über Carbonylgruppen verdoppelte Perinonfarbstoffe bekannt. Die in Beispiel 1 offenbarte Verbindung weist aber einerseites eine geringe Thermostabilität in Polyamid auf und andererseits ist die Farbstärke in Polystyrol stark abhängig von der Verarbeitungstemperatur.

Es wurden Verbindungen der allgemeinen Formel (I) oder deren tautomeren Formen gefunden 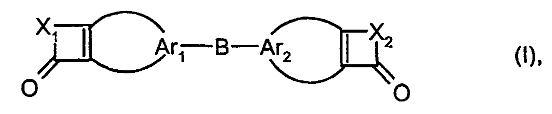 worin
- Ar₁ und Ar₂: unabhängig voneinander Reste zur Vervollständigung gegebenenfalls substituierter carbocyclischer Aromaten bedeuten, wobei als mögliche Substituenten C₁-C₆-Alkyl, insbesondere Methyl, Ethyl, n-Propyl, iso-Propyl, n-, sek- und tert-Butyl, Halogen, insbesondere Cl und Br, Alkyl- und Arylcarbonyl, Alkyl- und Arylsulfonyl, Nitro, Aryl, insbesondere gegebenenfalls substituiertes Phenyl, Aryloxysulfonyl, insbesondere -SO₂OC₆H₅, Hydroxy, C₁-C₆-Alkoxy, wie Methoxy oder Benzyloxy, Aryloxy, wie Phenoxy gegebenenfalls durch Alkyl oder Acyl substituiertes Amino wie NH₂, NHCOCH₃ und -N(C₂H₅)₂, gegebenenfalls durch Alkyl oder Aryl substituiertes Aminosulfonyl wie SO₂N(CH₃)₂ und SO₂NHCH₃ oder ein ankondensierter cycloaliphatischer oder heterocyclischer Ring in Frage kommen.
- B: eine gegebenenfalls durch CF₃ substituierte Alkylengruppe, die sowohl geradkettig oder verzweigt sein kann oder einen Rest der Formel 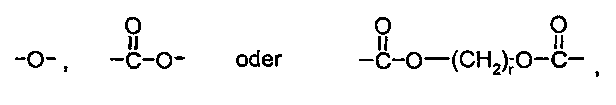 worin r für eine Zahl von 1-4 steht,
bedeutet, dessen Enden jeweils an ein aromatisches C-Atom der beiden Reste Ar₁ und Ar₂ gebunden sind,
und
- X₁ und X₂: unabhängig voneinander für einen Rest der Formeln ausgewählt aus der Gruppe 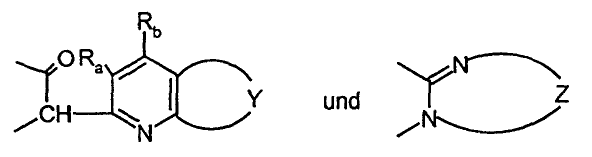 stehen, wobei sie jeweils so im Ring angeordnet sind, dass die 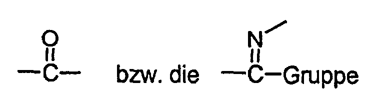 benachbart zur C-C-Doppelbindung steht,
worin
- Y: den Rest eines gegebenenfalls substituierten Benzol- oder Naphthalinringes bildet, wobei als mögliche Substituenten Halogen, insbesondere Cl und Br, -COOH, -COOR, wobei R für C₁-C₁₀-, vorzugsweise C₁-C₄-Alkyl, insbesondere Methyl und Ethyl, C₆-C₁₀-Aryl oder C₅-C₈-Cycloalkyl steht und C₁-C₆-Alkyl, insbesondere Methyl in Frage kommen.
- Z: gegebenenfalls substituiertes ortho-Phenylen, ortho-Naphthylen, peri-(1,8)-Naphthylen oder Arylen aus mehr als zwei miteinander kondensierten Benzolringen bedeutet, wobei die Arylreste, die mehr als zwei miteinander kondensierte Benzolringe aufweisen, in ortho- oder entsprechend einer peri-Stellung im Naphthalin verbrückt sind, wobei als mögliche Substituenten C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder ein ankondensierter cycloaliphatischer oder heterocyclischer Ring in Frage kommen.
- Ra: H oder OH bedeuten und
- Rb: H oder Halogen, insbesondere F, Br und Cl bedeutet
mit Ausnahme von Verbindungen X₁ und X₂ für einen Rest der Formel 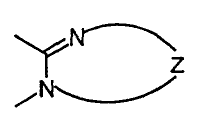 stehen, wobei Z die oben angegebene Bedeutung hat und
B einen Rest der Formel 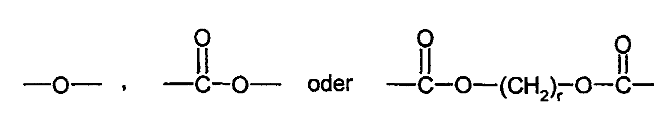 bedeutet, worin r die oben genannte Bedeutung besitzt.

Die peri-Stellung entspricht eigentlich der 1,8-Stellung im Naphthalin. Diese Bedeutung wird allerdings sowohl in der Literatur als auch im Sinne der vorliegenden Anmeldung auch auf Arylene ausgeweitet, die mehr als zwei miteinander kondensierte Benzolringe aufweisen.

Bevorzugte Substituenten von Z sind:
Chlor, Brom, Nitro, Methoxy, NH₂, Benzyloxy, Hydroxy, -SO₂O(C₆H₅), -SO₂N(CH₃)₂, -SO₂NHCH₃, Methyl, Ethyl, n-Propyl, iso-Propyl, n-, sek-, tert.-Butyl, NHCOCH₃, -N(C₂H₅)₂ oder gegebenenfalls substituiertes Phenyl.

Besonders bevorzugt bedeuten Ar₁ und Ar₂ unabhängig voneinander einen Rest zur Vervollständigung eines gegebenenfalls substituierten Benzol- oder Naphthalinringes, insbesondere eines gegebenenfalls substituierten Benzolringes.

Besonders bevorzugt sind Verbindungen der Formel (I), die der Formel (II) oder deren tautomeren Formen entsprechen 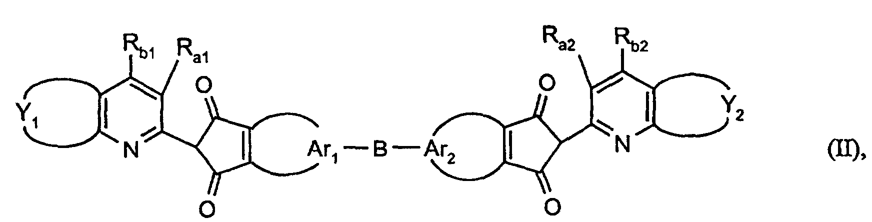 worin
- Y₁ und Y₂: unabhängig voneinander den Rest eines gegebenenfalls substituierten Benzol- oder Naphthalinringes bilden, wobei als mögliche Substituenten für die Reste Y₁ und Y₂ die für den Rest Y angegebenen zu nennen sind,
- Rₐ₁ und Rₐ₂: unabhängig voneinander H oder OH bedeuten,
- R_{b1} und R_{b2}: unabhängig voneinander H oder Halogen, insbesondere F, Br oder Cl bedeuten und
- Ar₁, Ar₂ und B: die oben angegebene Bedeutung besitzen.

Besonders bevorzugt bedeuten R_{b1} und R_{b2} jeweils Wasserstoff.

Besonders bevorzugt sind Verbindungen der Formel (II), die der Formel (IIa) oder deren tautomeren Formen entsprechen 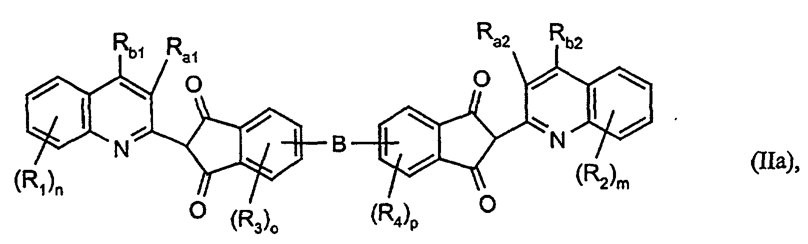 worin
- n und m: unabhängig voneinander für eine Zahl von 0 bis 4 stehen,
- R₁ und R₂: unabhängig voneinander jeweils gleich oder verschiedene Bedeutung besitzen, wie sie für die Substituenten des durch Y₁ und Y₂ vervollständigten Reste angegeben sind,
- o und p: unabhängig voneinander eine Zahl von 0 bis 2, insbesondere 0 oder 1 bedeuten,
- R₃ und R₄: unabhängig voneinander jeweils gleich oder verschiedene Bedeutung annehmen können, wie sie für die Substituenten der durch Ar₁ bzw. Ar₂ vervollständigten carbocyclischen Aromaten angegeben sind,
- R_{b1} und R_{b2}: die obengenannte Bedeutung haben, vorzusweise für H stehen,
- Rₐ₁ und Rₐ₂: die obengenannte Bedeutung haben, vorzugsweise für OH stehen und
- B: die obengenannte Bedeutung hat.

Die bevorzugte Bedeutung von B ist eine durch CF₃ gegebenenfalls substituierte C₁-C₅-Alkylengruppe, die sowohl geradkettig oder verzweigt sein kann sowie der Rest der Formel

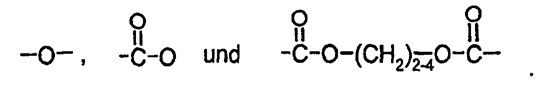

Insbesondere sind dabei zu nennen:
-CH₂-, -CH₂-CH₂-, -CH₂CH₂CH₂-, -CH₂CH₂CH₂CH₂-,

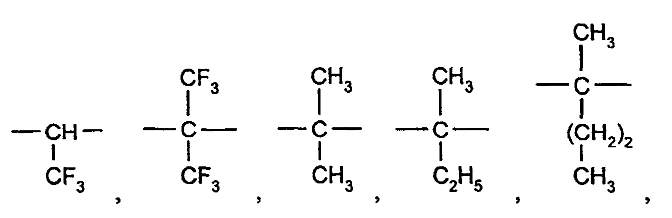

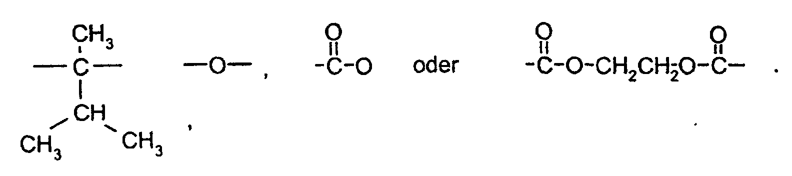

Ganz besonders bevorzugt steht B für -CH₂-, -CH(CF₃)-, -C(CF₃)₂- oder

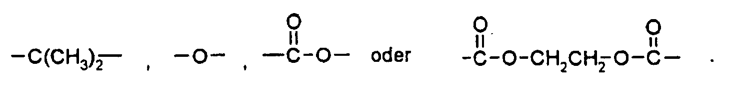

Ganz besonders bevorzugt sind Verbindungen der Formel (II), worin
Y₁ = Y₂
Rₐ₁ = Rₐ₂
R_{b1} = R_{b2} and
Ar₁ = Ar₂ bedeuten.

Entsprechend vorteilhaft sind Verbindungen der Formel (IIa), worin
n = m,
R₁ = R₂,
Rₐ₁ = Rₐ₂,
R_{b1} = R_{b2}
o = p und
R₃ = R₄ bedeutet,
wobei insbesondere
n, m, o und p für 0 stehen.

Die gegebenenfalls substituierte Alkylengruppe, sowie die Reste der Formeln 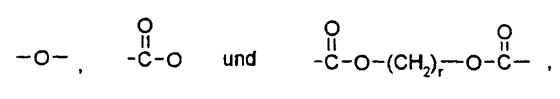 worin r die obige Bedeutung hat, in der Bedeutung von B sind mit ihren Enden jeweils an den jeweiligen Aromaten Ar₁ bzw. Ar₂ vorzugsweise in para-Stellung zu einer Carbonylgruppe gebunden.

Besonders bevorzugt sind Verbindungen der Formel (II), die der Formel (IIb) oder deren tautomere Formen entsprechen 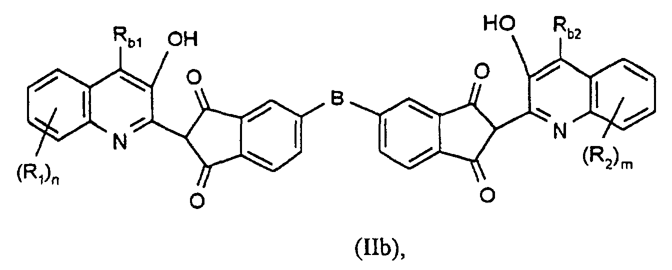 worin
n, m, R₁, R₂, R_{b1}, R_{b2} und B die oben angegebenen Bedeutungen haben.

Die erfindungsgemäßen Verbindungen der Formel (I) zeichnen sich durch eine hervorragende Sublimierechtheit beim Massefärben von Kunststoffen aus. Zudem besitzen sie eine sehr gute Lichtechtheit, gute Thermostabilität und eine besonders hohe Farbstärke. Ein Vergleich in der Farbstärke beispielsweise der Verbindungen der Formel (II) gegenüber den nicht verdoppelten Chinophthalonen zeigt eine mehr als additive Zunahme, was einen synergistischen Effekt erkennen läßt.

Ein besonderer Vorteil liegt bei den symmetrisch verbrückten Chinophthalonen der Formel (II), also worin Y₁ = Y₂, Rₐ₁ = Rₐ₂, R_{b1} = R_{b2}, und Ar₁ = Ar₂ bedeutet, gegenüber den nicht über das Brückenglied B verdoppelten Chinophthalonen darin, daß bei nahezu identischem Farbton von verdoppeltem zu unverdoppeltem System die Farbstärke bei Einsatz der gleichen Menge bei den erfindungsgemäßen Chinophthalonen in der Regel deutlich höher ist.

Besitzen die erfindungsgemäßen Chinophthalone der Formel (II) unterschiedliche Bedeutungen für Y₁ und Y₂ und/oder Rₐ₁ und Rₐ₂, und/oder Ar₁ und Ar₂, so kann es vorteilhaft sein, die gegebenenfalls herstellungsbedingt entstehenden Mischungen von symmetrischen und unsymmetrischen Chinophthalonen dem Verwendungszweck zuzuführen.

Ebenfalls bevorzugt sind Verbindungen der Formel (I), die der Formel (III) oder deren tautomeren Formen entsprechen 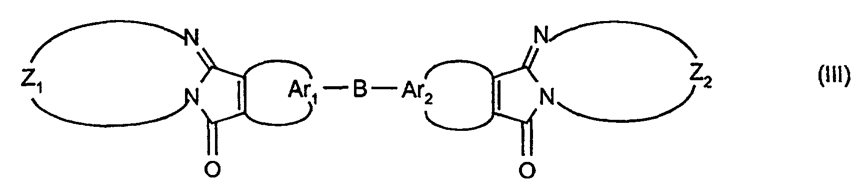 worin
- Z₁ und Z₂: unabhängig voneinander gegebenenfalls substituiertes ortho-Phenylen, ortho-Naphthylen, peri-(1,8)-Naphthylen oder Arylen aus mehr als zwei miteinander kondensierten Benzolringen bedeuten, wobei die Arylreste, die mehr als zwei miteinander kondensierte Benzolringe aufweisen, in ortho- oder entsprechend einer peri-Stellung im Naphthalin verbrückt sind, wobei als mögliche Substituenten für die Reste Z₁ und Z₂ die für den Rest Z angegebene in Frage kommen.
und
Ar₁, Ar₂ und B die oben angegebenen Bedeutungen besitzen.

Besonders bevorzugte Reste Z₁ und Z₂ entsprechen unabhängig voneinander einem gegebenenfalls substituierten peri-(1,8)-Naphthylen.

Besonders bevorzugt sind Verbindungen der Formel (III), die der Formel (IIIa) entsprechen 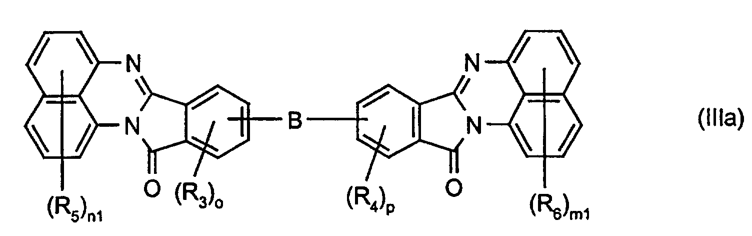 worin
- n₁ und m₁: unabhängig voneinander für eine Zahl von 0 bis 4 stehen,
- R₅ und R₆: unabhängig voneinander jeweils gleich oder verschieden sind und die Bedeutung der fiir die Reste Z₁ und Z₂ genannten Substituenten annehmen können, insbesondere für Halogen und C₁-C₆-Alkyl, stehen,
- o und p: unabhängig voneinander eine Zahl von 0 bis 2, insbesondere 0 oder 1, bedeuten,
- R₃ und R₄: unabhängig voneinander jeweils gleich oder verschieden sind und die Bedeutung der für die Reste Z₁ und Z₂ genannten Substituenten annehmen können, insbesondere Halogen, NO₂, -NH-Acyl oder -NH-Alkyl bedeuten und
- B: die obengenannte Bedeutung hat.

Die bevorzugte Bedeutung von B ist eine durch CF₃ gegebenenfalls substituierte C₁-C₅-Alkylengruppe, die sowohl geradkettig oder verzweigt sein kann.

Insbesondere sind dabei zu nennen:
-CH₂-, -CH₂-CH₂-, -CH₂CH₂CH₂-, -CH₂CH₂CH₂CH₂-,

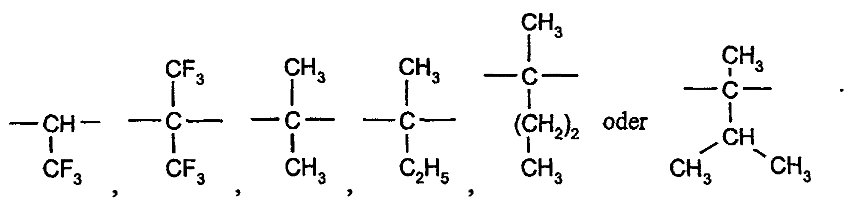

Ganz besonders bevorzugt sind Verbindungen der Formel (III),
worin
Z₁ = Z₂ und
Ar₁ = Ar₂ bedeuten.

Entsprechend vorteilhaft sind Verbindungen der Formel (IIIa),
worin
n₁ = m₁,
R₅ = R₆,
o = p und
R₃ = R₄ bedeuten,
wobei insbesondere
n₁, m₁, o und p für 0 stehen.

Die gegebenenfalls durch CF₃ substituierte Alkylengruppe in der Bedeutung von B ist an den jeweiligen Aromaten Ar₁ bzw. Ar₂ vorzugsweise in para-Stellung zu einer Carboxylgruppe gebunden.

Besonders bevorzugt sind Verbindungen der Formel (III), die der Formel (IIIb) entsprechen 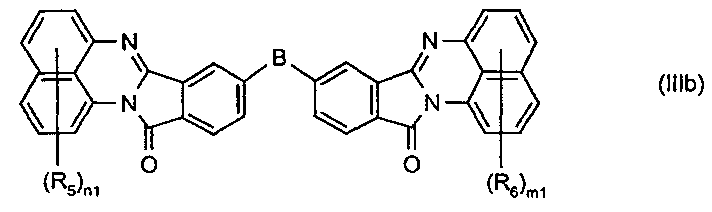 worin
n₁, m₁, R₅, R₆ und B die oben angegebenen Bedeutungen haben.

Die erfindungsgemäßen Verbindungen der Formel (III) zeichnen sich ebenfalls durch eine hervorragende Sublimierechtheit beim Massefärben von Kunststoffen aus. Zudem besitzen sie eine sehr gute Lichtechtheit, gute Thermostabilität und eine besonders hohe Farbstärke. Ein Vergleich in der Farbstärke gegenüber dem nicht verdoppelten Perinon zeigt beispielsweise eine mehr als additive Zunahme, was einen synergistischen Effekt erkennen läßt.

Ein besonderer Vorteil bei den symmetrischen Perinonen der Formel (III), also worin Z₁ = Z₂ und Ar₁ = Ar₂ bedeutet, gegenüber den nicht über das Brückenglied B verdoppelten Perinonen liegt darin, daß bei fast identischem Farbton von verdoppeltem zum unverdoppelten System die Farbstärke bei Einsatz der gleichen Menge bei den erfindungsgemäßen Perinonen in der Regel deutlich höher ist.

Besitzen die erfindungsgemäßen Perinone der Formel (III) unterschiedliche Bedeutungen für Z₁ und Z₂ und/oder fiir Ar₁ und Ar₂, so kann es vorteilhaft sein, die gegebenenfalls herstellungsbedingt entstehenden Mischungen von symmetrischen und unsymmetrischen Perinonen der Formel (III) dem Verwendungszweck zuzuführen.

Ebenfalls bevorzugt sind Verbindungen der Formel (I), die der Formel (IV) oder deren tauromeren Formen entsprechen 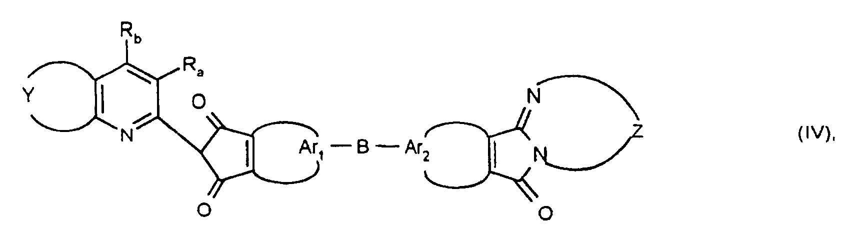 worin
Y, Z, Rₐ, R_{b}, Ar₁, Ar₂ und B die oben angegebene Bedeutung besitzen.

Besonders bevorzugt sind Verbindungen der Formel (IV), die der Formel (IVa) oder deren tautomeren Formen entsprechen 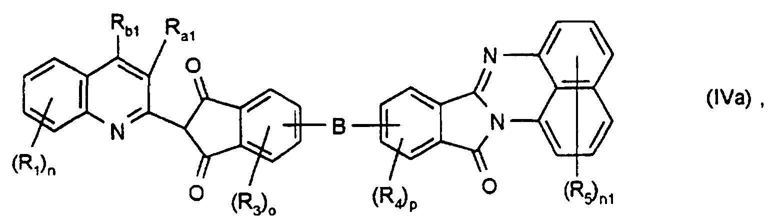 worin
R₁, R₃, R₄, R₅, R_{b1}, Rₐ₁, B, n, p und n₁ die oben angegebene Bedeutungen besitzen.

Ganz besonders bevorzugt sind Verbindungen der Formel (IV), die der Formel (IVb) oder deren tautomeren Formen entsprechen 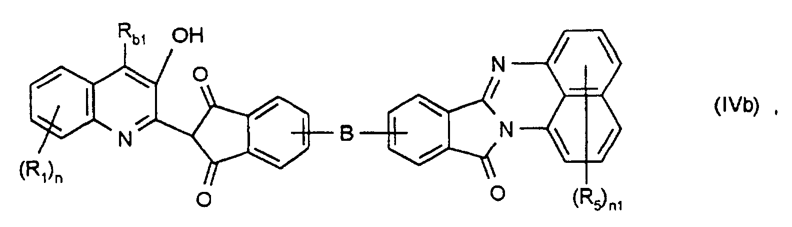 worin
R₁, R₅, R_{b1}, B, n und n₁ die oben angegebene Bedeutung besitzen.

Die erfindungsgemäßen Verbindungen der Formel (IV) zeichnen sich ebenfalls durch eine hervorragende Sublimierechtheit beim Massefärben von Kunststoffen aus. Zudem besitzen sie eine sehr gute Lichtechtheit, gute Thermostabilität und eine besonders hohe Farbstärke.

Die Thermostabilität ist bei 300°C und deutlich darüber sehr gut.

Besonders bevorzugt sind herstellungsbedingte Mischungen enthaltend Verbindungen der Formel (IV) sowie solche der Formeln (II) und (III). Dabei sind insbesondere solche Mischungen von Vorteil, welche neben der Verbindung der Formel (IV) 0 bis 25 Gew.-% einer Verbindung der Formel (II) und 0 bis 25 Gew.-% einer Verbindung der Formel (III) enthält, wobei die Summe aus den Verbindungen (IV), (II) und (III) 100 % beträgt.

Die Erfindung betrifft weiterhin ein Verfahren zur Herstellung der erfindungsgemäßen Verbindungen der Formel (I), das dadurch gekennzeichnet ist, daß man Tetracarbonsäuren oder deren Anhydride der Formel (V) 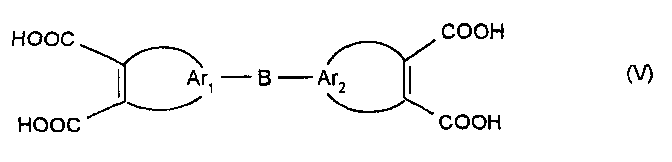 worin
Ar₁, Ar₂ und B die obengenannte Bedeutung besitzen,
mit einer oder mehreren Verbindungen der Formeln (VI) und/oder (VII) 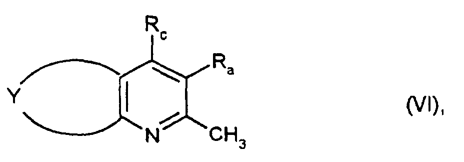 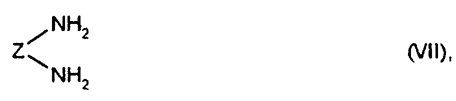 worin
- R_{c}: H, COOH oder Halogen, insbesondere F, Br und Cl bedeutet, insbesondere für H oder COOH steht und
- Y, Z und Rₐ: die oben angegebene Bedeutung besitzen,
kondensiert, wobei die Summe der Verbindungen der Formeln (VI) und (VII) zwei Mol-Äquivalenten, bezogen auf die Tetracarbonsäure (V) entspricht.

Die Angabe der Mol-Äquivalente der zur Herstellung der Verbindung (I) eingesetzten Reaktanden dient lediglich zur Angabe der Stöchiometrie und schließt nicht größere oder kleinere Mengen aus, die gegebenenfalls technisch sinnvoller sind.

Die eingesetzten Verbindungen der Formeln (VI) bzw. (VII) können in ihrer Summe selbstverständlich auch mehr als 2 Mol-Äquivalente, bezogen auf die Tetracarbonsäure (V) bzw. deren Anhydride, betragen. Bevorzugt ist es jedoch, stöchiometrisch zu arbeiten.

Die Kondensation kann dabei direkt durch Zusammenschmelzen äquimolarer Mengen der Komponenten der Formeln (V) und (VI) bzw. (VII) bei einer Temperatur von 120°C bis 250°C erfolgen, oder vorteilhafter durch Umsetzung in einem Lösungsmittel bei einer Temperatur von 110°C bis 220°C, gegebenenfalls unter Druck, durchgeführt werden, wobei eine destillative Entfernung des Reaktionswassers erfolgen kann.

Geeignete Lösungsmittel sind beispielsweise: Chlorbenzol, o-Dichlorbenzol, Trichlorbenzol, Xylol, Dimethylformamid, N-Methylpyrrolidon, Eisessig, Propionsäure, Phenol, Kresole, Phenoxyethanol, Glykole und deren Mono- und Dialkylether, Alkohole, z.B. Methanol, Ethanol, i-Propanol, Wasser und wäßrige Lösungsmittel wie z.B. verdünnte Schwefelsäure u.a.

Gegebenenfalls kann die Reaktion unter Zusatz eines sauren Katalysators erfolgen.

Geeignete Katalysatoren sind beispielsweise: Zinkchlorid, p-Toluolsulfonsäure, Salzsäure, Schwefelsäure, organische Säuren u.a.

Besonders bevorzugt wird die Tetracarbonsäure der Formel (V) in Form ihres Anhydrids eingesetzt.

Bevorzugt werden in das erfindungsgemäße Verfahren Verbindungen der Formel (V) eingesetzt, die der Formel (Va) oder deren Anhydriden entsprechen 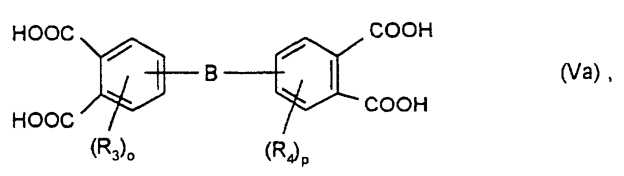 worin
R₃, R₄, B, o und p die obengenannten Bedeutungen besitzen.

Ganz besonders bevorzugt werden Verbindungen der Formel (V) eingesetzt, die der Formel (Vb) oder deren Anhydride entsprechen 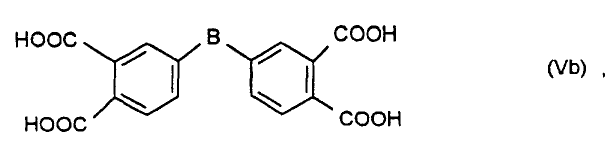 wobei
- B: für -CH₂-, -CH(CF₃)-, -C(CF₃)₂-, -C(CH₃)₂-, -O-, 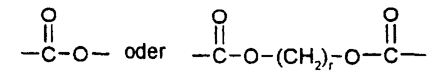 mit r = 2-4
steht und die obige Ausnahme auch hier gilt.

Verbindungen der Formel (V) sind teilweise aus JP-A-60 166 325, DE-A 2 337 631 sowie Chem. Heterocycl. Comp. 30, 1994, S. 31-34 sowie US-A 3 332 964 bekannt.

Bevorzugte Verbindungen der Formel (VI) sind Chinaldine der Formel (VIa) 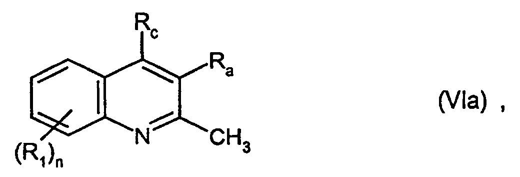 worin
R₁, R_{c}, Rₐ und n die oben angegebene Bedeutung haben.

Geeignete Chinaldine der Formel (VIa) sind beispielsweise solche der nachfolgend genannten Formeln:

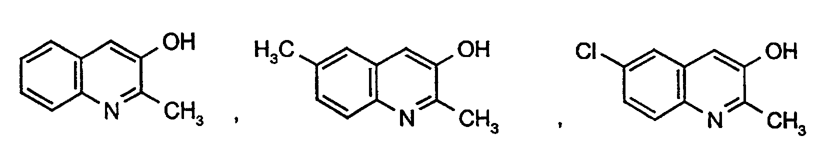

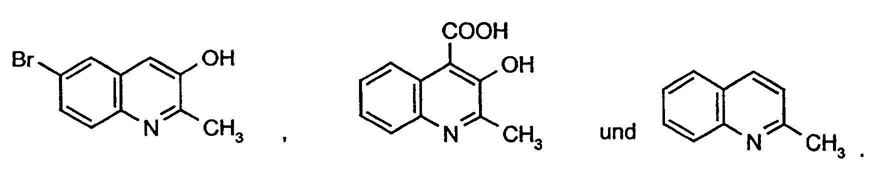

Die Diamine der Formel (VII) sind bekannt oder lassen sich beispielsweise analog bekannten Diaminen herstellen.

Als aromatische Diamine der Formel (VII) sind bevorzugt: o-Phenylendiamin, Chlor-o-phenylendiamine, Dichlor-o-phenylendiamine, Methyl-o-phenylendiamine, Ethyl-o-phenylendiamine, Methoxy-o-phenylendiamine, Acetamino-o-phenylendiamine, Phenyl-o-phenylendiamine, Naphthylen-o-diamine, ferner 1,8-Naphthylendiamin, Chlor-1,8-naphthylendiamine, Dichlor-1,8-naphthylendiamine, Methyl-1,8-naphthylendiamine, Dimethyl-1,8-naphthylendiamine, Methoxy-1,8-naphthylendiamine, Ethoxy-1,8-naphthylendiamine, Acetamino-1,8-naphthylendiamine und 1,8-Diaminoacetnaphthylen.

In einer weiteren bevorzugten Verfahrensvariante wird ein gegebenenfalls substituiertes peri-Naphthylendiamin als Verbindung der Formel (VII) eingesetzt, insbesondere 1,8-Naphthylendiamin

Bevorzugt ist das erfindungsgemäße Verfahren zur Herstellung von Verbindungen der Formel (I), die der Formel (II) entsprechen, das dadurch gekennzeichnet ist, daß man Tetracarbonsauren oder deren Anhydride der Formel (V) mit Verbindungen der Formeln (VIb) und/oder (VIc) 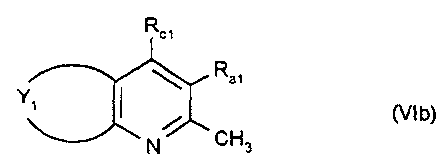 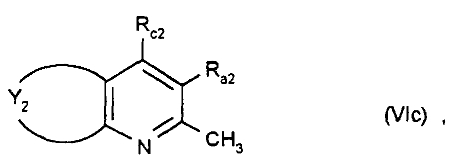 worin
- R_{c1} und R_{c2}: unabhängig voneinander H, COOH oder Halogen, insbesondere F, Br und Cl bedeuten, insbesondere für H oder COOH stehen und
- Rₐ₁, Rₐ₂, Y₁ und Y₂: die obengenannte Bedeutung besitzen,
kondensiert, wobei die Summe der Verbindungen (VIb) und (VIc) zwei Mol-Äquivalenten, bezogen auf die Tetracarbonsäure (V) entspricht.

Die Kondensation kann dabei direkt durch Zusammenschmelzen äquimolarer Mengen der Komponenten der Formeln (V) und (VIb) bzw. (VIc) bei einer Temperatur von 160°C bis 250°C, vorzugsweise 180 bis 220°C, besonders bevorzugt 190 bis 200°C erfolgen, oder vorteilhafter durch Umsetzung in einem Lösungsmittel bei einer Temperatur von 110°C bis 220°C, vorzugsweise 160 bis 180°C, gegebenenfalls unter Druck durchgeführt werden, wobei eine destillative Entfernung des Reaktionswassers erfolgen kann.

Bevorzugte Verbindungen der Formel (VIb) bzw. (VIc) sind Chinaldine der Formel (VIbb) 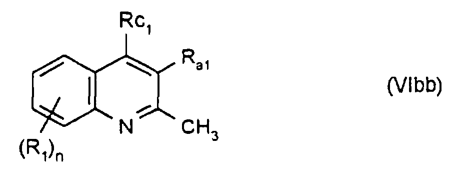 bzw. der Formel (VIcc) 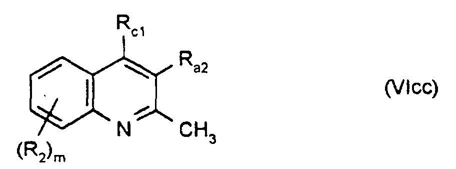 worin
R₁, R₂, R_{c1}, R_{c2}, Rₐ₁, Rₐ₂, n und m die oben angegebene Bedeutung haben.

Die Aufarbeitung eines Reaktionsansatzes zur Herstellung der Verbindungen der Formel (II) erfolgt vorzugsweise durch Verdünnen mit Alkoholen wie Methanol, Ethanol, Propanol oder Butanol. Auch aromatische Verdünnungsmittel wie Chlorbenzol oder Toluol können verwendet werden. Dieses erfindungsgemäße Verfahren liefert die erfindungsgemäße Verbindung vorzugsweise in Ausbeuten von 85 bis 95 % der Theorie.

Gegebenenfalls kann sich an die Kondensation eine Halogenierung anschließen, insbesondere Chlorierung oder Bromierung, wobei diese unter an sich bekannten Bedingungen erfolgt. So führt beispielsweise die Bromierung von Verbindungen der Formel (II) mit R_{b1} = R_{b2} = H in Eisessig bei einer Temperatur von 80 bis 120°C zu Verbindungen der Formel (II), worin R_{b1} und R_{b2} Brom bedeuten.

Das erfindungsgemäße Verfahren eignet sich ebenfalls bevorzugt zur Herstellung der Verbindungen der Formel (I), die der Formel (III) entsprechen, das dadurch gekennzeichnet ist, daß man Tetracarbonsäuren oder deren Anhydride der Formel (V) mit Verbindungen der Formeln (VIIa) und/oder (VIIb) kondensiert 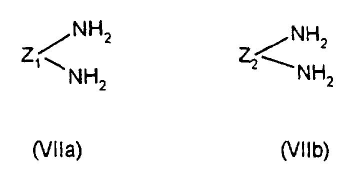 wobei die Summe der eingesetzten Diamine (VIIa) und (VIIb) zwei Mol-Äquivalente, bezogen auf die Tetracarbonsäure (V) entspricht und Z₁ und Z₂ die obengenannte Bedeutung besitzen.

Die Kondensation zur Herstellung von Verbindungen der Formel (III) kann dabei direkt durch Zusammenschmelzen äquimolarer Mengen der Komponenten der Formeln (V) und (VIIa) bzw. (VIIb) bei einer Temperatur von 120°C bis 250°C, vorzugsweise bei 120 bis 180°C, erfolgen, oder vorteilhafter durch Umsetzung in einem Lösungsmittel bei einer Temperatur von 120°C bis 220°C, vorzugsweise bei 120 bis 180°C, gegebenenfalls unter Druck, durchgeführt werden, wobei eine destillative Entfernung des Reaktionswassers erfolgen kann.

Verbindungen der Formel (III), die gegebenenfalls als Substituenten aus der Gruppe der Alkyl-, Arylaminosulfonylreste tragen, lassen sich beispielsweise aus den entsprechenden Verbindungen der Formel (III), in denen ein Substituent einen Chlorsulfonylrest bedeutet, mit Alkyl- bzw. Arylaminen darstellen.

Erfindungsgemäße Verbindungen der Formel (III), in denen ein Substituent ein Aryloxysulfonylrest ist, können auch durch Umsetzung der entsprechenden Chlorsulfonyl-Farbstoffe mit Phenolen oder Naphtholen in Gegenwart einer Base, z.B. Pyridin, Triethylamin, Alkali- bzw. Erdalkalicarbonaten, -hydroxiden oder -oxiden gewonnen werden.

Verbindungen der Formel (III), in denen Substituenten für Alkyloxy oder Acyloxy stehen, können zusätzlich durch Alkylierung bzw. Acylierung der erfindungsgemäßen Verbindungen, die eine Hydroxygruppe tragen, dargestellt werden.

Jene Verbindungen der Formel (III) mit einer gegebenenfalls acylierten bzw alkylierten Aminogruppe können außerdem durch Reduktion mit üblichen Reduktionsmitteln, z.B. Eisen, Zink, Natriumsulfid, Wasserstoff u.a. der entsprechenden Verbindungen, in denen der entsprechende Substituent für eine Nitrogruppe steht, und gegebenenfalls nachfolgende Acylierung bzw. Alkylierung gewonnen werden. Der Acylierungsschritt kann auch im Zuge der Reduktion durch Zusatz eines Acylierungsmittels erfolgen.

Die Aufarbeitung des Reaktionsansatzes bei der Herstellung von Verbindungen der Formel (III) erfolgt vorzugsweise durch Verdünnen mit Alkoholen wie Methanol, Ethanol, Propanol oder Butanol. Auch aromatische Verdünnungsmittel wie Chlorbenzol oder Toluol können verwendet werden. Das erfindungsgemäße Verfahren liefert die erfindungsgemäßen Verbindungen, vorzugsweise in Ausbeuten von 90 bis 95 % der Theorie.

Das erfindungsgemäße Verfahren ist ebenfalls bevorzugt zur Herstellung von Verbindungen der Formel (I), die der Formel (IV) entsprechen, das dadurch gekennzeichnet ist, dass man Tetracarbonsäuren oder deren Anhydride der Formel (V) mit Verbindungen der Formel (VI) und Diaminen der Formel (VII) kondensiert, wobei die Substituenten der genannten Verbindungen die oben angegebenen Bedeutungen haben und die Summe der Verbindungen der Formeln (VI) und (VII) zwei Mol-Äquivalente, bezogen auf die Tetracarbonsäure (V), beträgt. Als bevorzugte Verbindungen der Formeln (V) bis (VII) kommen die oben angegebenen in Frage.

Das Verhältnis der Verbindungen (VI) und (VII) zueinander kann in weiten Bereichen variieren. Es beträgt beispielsweise (VI) zu (VII) = 10:90 bis 90:10. Bevorzugt ist das Verhältnis etwa 1:1.

Die Kondensation kann dabei direkt durch Zusammenschmelzen äquimolarer Mengen der Komponenten der Formeln (V) und (VI) und (VII) bei einer Temperatur von 160°C bis 250°C, vorzugsweise 180 bis 220°C, besonders bevorzugt 190 bis 200°C erfolgen, oder vorteilhafter in einem Lösungsmittel bei einer Temperatur von 110°C bis 220°C, vorzugsweise 160 bis 180°C, gegebenenfalls unter Druck durchgeführt werden, wobei eine destillative Entfernung des Reaktionswassers erfolgen kann.

Die Erfindung betrifft weiterhin Verbindungen der Formel (V) oder deren Anhydride, worin Ar₁ und Ar₂ die obengenannte Bedeutung haben und
- B: einen Rest der Formel
-CH₂CH₂CH₂CH₂ 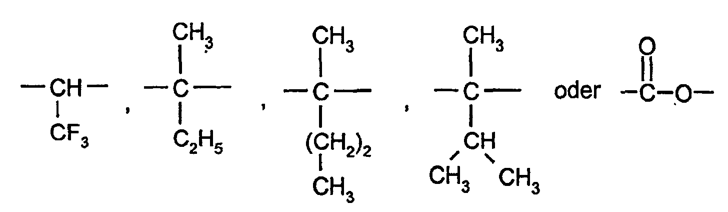
bedeutet.

Bevorzugte erfindungsgemäße Verbindungen der Formel (V) entsprechen den bereits oben angegebenen Vorzugsformen, d.h. der Formel (Va) bzw. (Vb) mit den entsprechenden Substituentenbedeutungen, wobei B den für die erfindungsgemäßen Verbindungen der Formel (V) angegebenen Bedeutungsumfang besitzt.

Die Erfindung betrifft weiterhin ein Verfahren zur Herstellung der Verbindungen der Formel (V), das dadurch gekennzeichnet ist, dass man Dichloride der Formel (VIII)

Cl-B-Cl (VIII)

mit Dimethylverbindungen der Formel (IXa) und/oder (IXb) 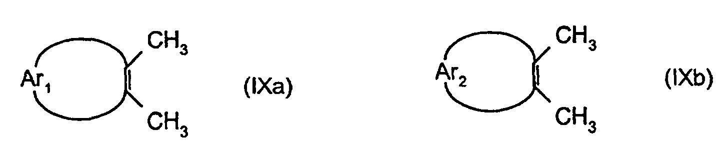 unter Friedel-Crafts-Bedingungen umsetzt, wobei die Menge der eingesetzten Verbindungen (IXa) und (IXb) zusammen mindestens 2 Mol-Äquivalente pro Mol der Verbindung (VIII) ausmacht, und das erhaltene Reaktionsprodukt anschließend oxidiert wird und Ar₁, Ar₂, und B die oben angegebene breiteste Bedeutung haben.

Eine bevorzugte Verbindung der Formel (IXa) bzw. (IXb) ist o-Xylol. Als Oxidationsmittel ist bevorzugt Salpetersäure zu nennen.

Die erfindungsgemäßen Verbindungen der Formel (I) eignen sich hervorragend zum Färben von Kunststoffen in der Masse.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester und Polyamide, sowie Polyolefine, insbesondere Polyethylen und Polypropylen.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignete Polyester sind: Polyethylenterephthalate, Polycarbonate und Celluloseester.

Bevorzugt sind Polystyrol, Styrol-Mischpolymere, Polycarbonate und Polymethacrylat. Besonders bevorzugt ist Polystyrol, Polyethylen und Polypropylen.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Verbindungen (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Verbindungen der Formel (II) sind gelb, die der Formel (III) rot und die der Formel (IV) orange.

Die Erfindung wird erläutert, jedoch nicht beschränkt auf die folgenden Beispiele, in denen die Teile gewichtsmäßig angegeben sind. Prozentangaben Gewichtsprozente (Gew.-%) bedeuten.

### Beispiele

### Beispiel 1

150 g (1,6 mol) Phenol wurden unter Rühren mit 20 g (0,14 mol) Chinaldin der Formel 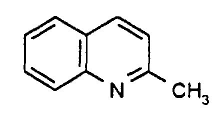 und 18,5 g (0,058 mol) 4,4'-Isopropylidendiphthalsäuredianhydrid versetzt und auf 175°C erwärmt. Dabei destillierte Reaktionswasser ab. Die Reaktionstemperatur wurde 12 Stunden lang aufrecht erhalten. Danach ließ man auf 100°C abkühlen und versetzte die Reaktionsmischung langsam über ca. 1 Stunde mit 350 ml Ethanol. Sobald die Temperatur auf 65 bis 70°C gesunken war, wurde die Temperatur beibehalten. Dann ließ man auf Raumtemperatur abkühlen. Der kristalline Niederschlag wurde abgesaugt und mehrfach mit warmem Methanol gewaschen Schließlich wurde mit heißem Wasser gewaschen und bei 70°C im Vakuum getrocknet.
Ausbeute: 29,3 g = 91 % d. Th.

Der Farbstoff besitzt die Formel

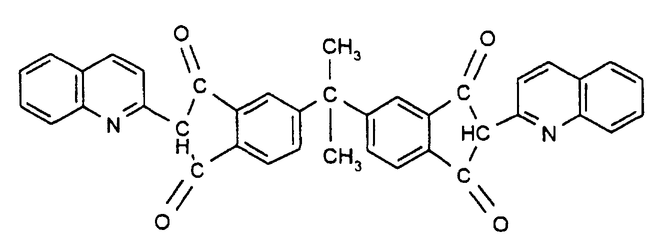

Die Farbstärke dieses Farbstoffs ist ca. 5 % höher als die des nicht verdoppelten Farbstoffs der Formel 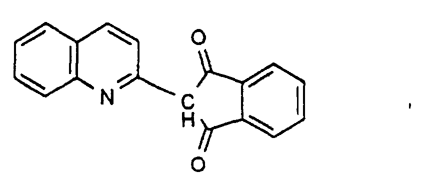 bezogen auf jeweils gleiche Gewichtsmengen. Die Sublimation, bestimmt über thermogravimetische Analyse (TGA) bei 300°C, des verdoppelten Farbstoffs ist deutlich kleiner als bei dem unverbrückten Farbstoff obiger Formel.

Er färbt Polystyrol in der Masse in klaren grünstichig gelben Tönen mit guten Echtheiten.

### Beispiel 2

150 ml (1,6 mol) Phenol von 80°C wurden unter Rühren mit 26,4 g (0,14 mol) 3-Hydroxychinaldin-4-carbonsäure der Formel 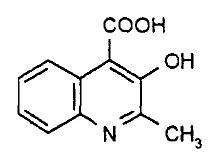 und 18,5 g (0,058 mol) 4,4'-Isopropylidendiphthalsäuredianhydrid versetzt, auf 175°C erhitzt und 12 Stunden auf dieser Temperatur gehalten. Dabei destillierte Reaktionswasser ab und es wurde Kohlendioxid aus der 3-Hydroxychinaldincarbonsäure-4 abgespalten. Dann wurde auf 100°C abgekühlt, im Verlauf von ca. 1 Stunde mit 250 ml Methanol versetzt und auf Raumtemperatur abgekühlt. Der kristalline Farbstoff-Niederschlag wurde abfiltriert, mit 500 ml Methanol und danach mit 500 ml heißem, enthärtetem Wasser gewaschen. Dann wurde der Farbstoff getrocknet.
Ausbeute: 31,6 g = 93 % d. Th.

Der Farbstoff besitzt die Formel

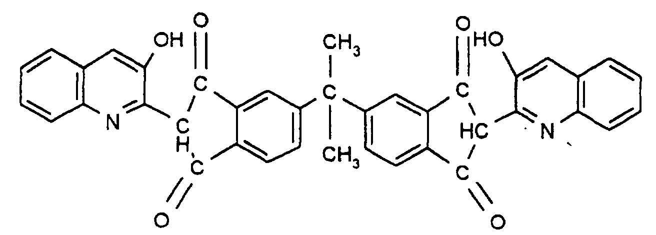

Die Farbstärke des Farbstoffes ist ca. 10 % höher als die der gleichen Menge des nicht verdoppelten Farbstoffes der Formel

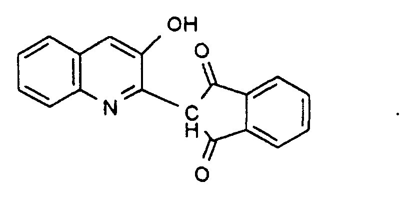

Bei 400°C sublimiert deutlich weniger Substanz dieses Farbstoffes (bestimmt nach TGA) als nicht verdoppelter Farbstoff obiger Formel.

Er färbt Kunststoffe wie Polycarbonat, ABS, Polyester und Polypropylen in der Masse in klaren neutralen Gelbtönen von sehr guten Echtheiten. Anstelle von Phenol wurde als Lösungsmittel auch o-Dichlorbenzol, Nitrobenzol und Ditolylether eingesetzt, wobei gleiche Ergebnisse erzielt wurden.

### Beispiel 3

150 ml (1,6 mol) o-Dichlorbenzol wurden unter Rühren mit 26,4 g (0,14 mol) 3-Hydroxychinaldin-4-carbonsäure der Formel 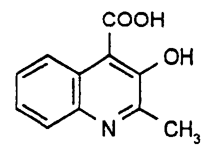 und 18,0 g (0,058 mol) 4,4'-Methylen-diphthalsäure-dianhydrid versetzt und auf 220°C erhitzt. Die Reaktion wurde im Laufe von 12 Stunden unter Abdestillieren von Reaktionswasser und Abspaltung von Kohlendioxid durchgeführt. Danach ließ man auf 100°C abkühlen und versetzte mit 250 ml Methanol. Nach Abkühlen auf Raumtemperatur wurde der auskristallisierte Farbstoff abfiltriert, mit 250 ml Methanol und danach mit 500 ml heißem, enthärteten Wasser gewaschen und bei 70°C im Vakuum getrocknet.
Ausbeute: 31,7 g = 92 % d Th.

Der Farbstoff besitzt die Formel

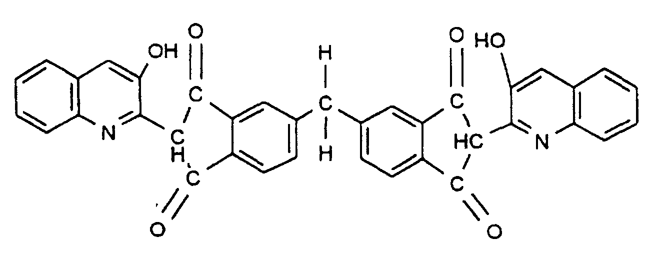

In der Masse werden Kunststoffe wie z.B. Polystyrol, Polycarbonat, Polyester oder Polypropylen in neutralen Gelbtönen mit sehr guten Echtheiten gefärbt.

Bei 300°C sublimiert deutlich weniger Substanz des Farbstoffes (bestimmt durch TGA) als des nicht verdoppelten Farbstoffes (siehe Beispiel 2). Die Farbstärke ist im Vergleich zu der gleichen Menge des nicht verdoppelten Farbstoffs (siehe Beispiel 2) ca. 5 % höher.

### Beispiel 4

150 ml (1,6 mol) o-Dichlorbenzol wurden bei 80°C unter Rühren mit 26,4 g (0,14 mol) 3-Hydroxychinaldin-4-carbonsäure 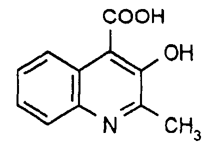 und 26,0 g (0,056 mol) 4,4'-[2.2.2-Trifluor-1-(trifluormethyl)-ethyliden]-diphthalsäureanhydrid versetzt und auf 170°C erhitzt. Die Reaktionstemperatur wurde 12 Stunden beibehalten. Dabei destillierte Reaktionswasser ab und aus der Hydroxychinaldincarbonsäure wurde Kohlendioxid abgespalten. Nach 12 Stunden wurde auf 100°C abgekühlt und im Laufe von 1 Stunde mit 250 ml Methanol versetzt. Nach dem Abkühlen auf Raumtemperatur wurde der kristalline ausgefallene Farbstoff abgesaugt, mit 250 ml Methanol gewaschen, mit 500 ml heißem, enthärtetem Wasser gewaschen und bei 70°C im Vakuum getrocknet.
Ausbeute: 39,5 g = 93 % d. Th.

Der Farbstoff hat die Strukturformel

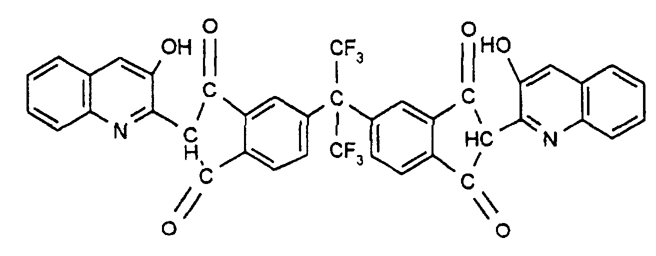

Polystyrol, Polycarbonat, Polyamid, Polyester und ABS wurden in neutralen Gelbtönen gefärbt bei hoher Temperaturbeständigkeit und sehr guten Echtheiten.

Der Farbstoff ist bei 400°C thermostabil und sublimiert in deutlich geringerem Maße (bestimmt durch TGA) als der nicht verdoppelte Farbstoff (Formel siehe Beispiel 2).

### Beispiel 5

100 g Polystyrol-Granulat und 0,02 g des Farbstoffs aus Beispiel 2 wurden in einem Trommelmischer für 15 Min. intensiv vermischt. Das trocken angefärbte Granulat wurde bei 240°C auf einer Schneckenspritzgießmaschine verarbeitet. Man erhielt transparente, gelbe Platten von sehr guter Lichtechtheit. Anstelle von Polystyrol wurden auch Mischpolymerisate mit Butadien und Acrylnitril verwendet Setzt man zusätzlich 0,5 g Titandioxid zu, so erhielt man farbstarke, gedeckte Färbungen.

### Beispiel 6

150 ml o-Dichlorbenzol wurden unter Rühren mit 16,8 g 4,4'-Isopropyliden-di-phthalsäure-dianhydrid und 19,0 g Naphthylendiamin-1,8 versetzt. In Gegenwart einer Stickstoffatmosphäre wurde auf 130°C erhitzt und diese Temperatur für 8 h gehalten. Dann wurde weitere 3 h auf 150°C erwärmt, anschließend auf 80°C abgekühlt und die Reaktionsmischung mit 150 ml Methanol versetzt. Nach weiteren 2 h bei 65-70°C, kühlte man auf Raumtemperatur ab, rührte 1 h bei Raumtemperatur und filtrierte den Farbstoff ab. Danach wurde der Farbstoff mit 100 ml Methanol gewaschen und dann mit 250 ml heißem Wasser gewaschen und im Vakuum bei 60°C getrocknet.
Ausbeute: 27,9 g = 96 % der Theorie.

Der Farbstoff hat die Strukturformel

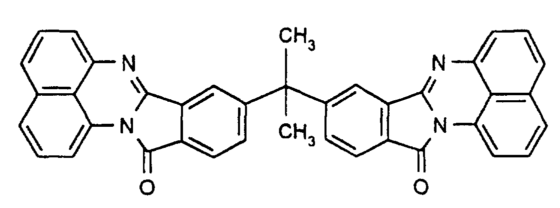

Anstatt o-Dichlorbenzol wurden auch andere Lösungsmittel wie z.B. o-Xylol, Phenol, Diphenylether oder Ditolylether verwendet. Der gelbstichig orange Farbstoff färbt Kunststoffe wie Polystyrol, Polycarbonat, Polyester, Polyamid, Polypropylen oder Mischpolymerisate aus Acrylnitril, Butadien und Styrol in der Masse in sublimierechten, lichtechten und temperaturstabilen Färbungen.

Gemäß thermogravimetrischer Analyse ergab sich bei 400°C lediglich ein Farbstoffverlust durch Sublimation von 5 %. In dem unverbrückten Farbstoff der Formel 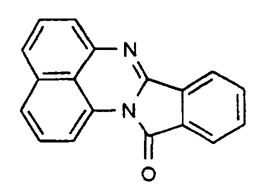 betrug der Farbstoffverlust durch Sublimation unter gleichen Bedingungen dagegen 9%.

### Beispiel 7

150 ml Phenol wurden unter Rühren bei einer Temperatur von ca. 80°C in einer Stickstoffatmosphäre mit 15,4 g 4,4'-Methylendiphthalsäuredianhydrid und 16,0 g Naphthylendiamin-1,8 versetzt. Das Reaktionsgemisch wurde auf 130°C erhitzt und 8 h bei dieser Temperatur gehalten. Danach wurde auf 80°C abgekühlt, mit 250 ml Methanol versetzt und 2 h bei 60-65°C gerührt. Die Reaktionsmischung wurde auf Raumtemperatur abgekühlt und 1 h nachgerührt. Der angefallene Farbstoff wurde abgesaugt, mit 100 ml Methanol und 250 ml heißem Wasser gewaschen und im Vakuum bei 60°C getrocknet.
Ausbeute: 27 g = 93 % der Theorie.

Der Farbstoff hat die Formel

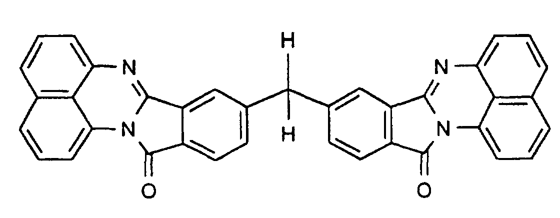

Der Farbstoff färbte Kunststoffe wie Polypropylen, Polystyrol, Polycarbonat, Mischpolymerisate aus Polyacrylnitril, Butadien und Styrol in der Masse in gelborange Farbtönen. Die Färbungen sind sublimierecht und besitzen hohe Lichtechtheit und hohe Temperaturstabilität. Die thermogravimetrische Analyse des Farbstoffs ergab bei 400°C einen Gewichtsverlust durch Sublimation der deutlich unter dem der nicht verbrückten Verbindung, wie sie bereits in Beispiel 6 genannt ist, lag.

### Beispiel 8

200 ml o-Dichlorbenzol wurden unter Überleiten von Stickstoff mit 15,4 g 4,4'-[2,2,2-Trifluor-1-(trifluormethyl)-ethyliden]-diphthalsäure-dianhydrid und 16,0 g Naphthalindiamin-1,8 versetzt. Man erhitzte auf 130°C und hielt 8 h auf dieser Temperatur. Danach wurde auf 80°C abgekühlt und die Reaktionsmischung mit 250 ml Methanol versetzt. Man rührte 2 h bei 60-65°C und kühlte dann auf Raumtemperatur ab. Der Farbstoffniederschlag wurde abgesaugt und mit 100 ml Methanol gewaschen. Dann wurde mit 250 ml heißem Wasser gewaschen und im Vakuum bei 60°C getrocknet.
Ausbeute: 19,2 g = 94 % der Theorie.

Der Farbstoff hat die Strukturformel 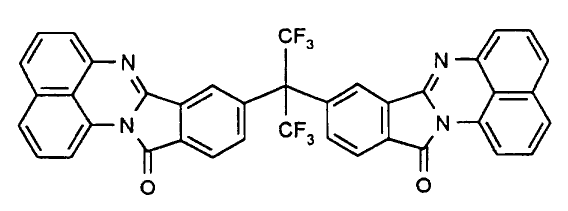 und färbt in der Masse Polyethylen, Polypropylen, Polystyrol, Mischpolymerisate aus Acrylnitril, Butadien und Styrol, Polycarbonat und Polyester in gelborange Nuancen mit sehr guter Echtheiten wie Lichtechtheit, Migrationsechtheit, Thermostabilität sowie Sublimationsechtheit.

Bei einer thermogravimetrischen Analyse dieses Farbstoffs bei 400°C war ein deutlich geringerer Substanzverlust durch Sublimation zu beobachten, als bei dem unverbrückten Farbstoff, der in Beispiel 6 genannt ist.

### Beispiel 9

In 100 g Phenol wurden bei 60°C unter Rühren 10,2 g 3-Hydroxychinaldin-carbonsäure-4 (0,05 mol) und 8,0 g 1,8-Diarnino-naphthalin (0,05 mol) sowie 18,5 g Isopropylidin-bis-phthalsäure-anhydrid getragen. Dann wurde das Reaktionsgemisch auf 170 bis 175°C erwärmt und 14 Stunden auf dieser Temperatur gehalten. Nach Abkühlen auf 80°C wurden 350 ml Methanol zugesetzt. Der ausgefallene Farbstoff wurde abgesaugt, mit Methanol und dann mit heißem Wasser gewaschen. Danach wurde das Produkt bei 70°C im Vakuum getrocknet. Die Ausbeute betrug 28,9 g eines orangen Farbstoffs der Formel 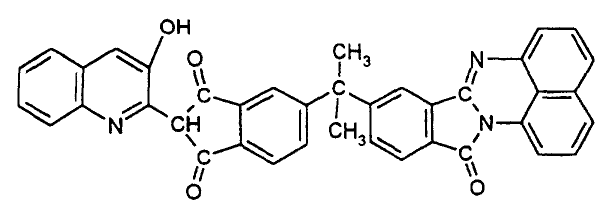 der außerdem etwa gleiche Anteile des beidseitigen Chinophthalons wie des beidseitigen Perinons enthielt je 10 %. Der Farbstoff besitzt eine ca. 20 % höhere Farbstärke als der beidseitige Perinonfarbstoff. Der Farbstoff ist bis 300°C thermostabil und besitzt bei dieser Temperatur eine sehr gute Sublimierechtheit.

### Beispiel 10

In 100 g Phenol von 60°C wurden 10,2 g 3-Hydroxychinaldin-carbonsäure-4 (0,05 mol) eingetragen und 0,5 Stunden unter Rühren auf 170°C gehalten. Dann wurde auf 150°C abgekühlt, es wurden 18,5 g Isopropyliden-bis-phthalsäure-anhydrid (0,055 mol) und 8,0 g 1,8-Diamino-naphthalin eingetragen. Man hielt die Temperatur 3 Stunden auf 150°C und dann 9 Stunden auf 170°C. Man kühlte auf 80°C ab, versetzte mit 350 ml Methanol und saugte den Farbstoff bei Raumtemperatur ab, wusch mit Methanol und danach mit heißem Wasser. Nach dem Trocknen bei 70°C im Vakuum erhielt man 32,0 g eines rotstichig orangen Farbstoffs.
Der Farbstoff hat die gleiche Zusammensetzung wie der des Beispiels 1.

### Beispiel 11

100 g Phenol von 60°C wurden unter Rühren mit 7,15 g Chinaldin (0,05 mol) und 8,0 g 1,8-Diaminonaphthalin sowie 18,5 g Isopropyliden-bis-phthalsäure-anhydrid versetzt. Dann wurde auf 170 bis 175°C erwärmt und diese Temperatur 10 Stunden gehalten. Dann wurde abgekühlt, bei 80°C mit 250 ml Methanol versetzt und der ausgefallene Farbstoff abgesaugt. Nach Wäsche mit Methanol und heißem Wasser wurde bei 70°C im Vakuum getrocknet. Die Ausbeute betrug 25,3 g.

Der Farbstoff hat die Formel

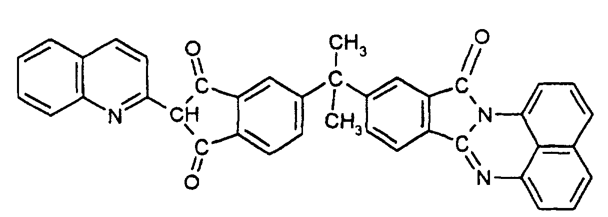

Im Gemisch mit diesem Farbstoff lag auch der beidseitige Chinophthalonfarbstoff (10 %) sowie der beidseitige Perinonfarbstoff (10 %) vor. Der Farbstoff ist bei 300°C thermostabil und besitzt eine sehr gute Sublimierechtheit.

### Beispiel 12

In 100 g Phenol von 60°C wurden unter Rühren 10,2 g 3-Hydroxychinaldin-carbonsäure-4 (0,05 mol), 8,0 g Naphthylendiamin-1,8 (0,05 mol) und 15,5 g (0,05 mol) Hexafluoro-iso-propyliden-bis-phthalsäureanhydrid eingetragen. Das Reaktionsgemisch wurde auf 170 bis 175°C erwärmt und 14 Stunden bei dieser Temperatur gehalten. Nach Abkühlen auf 80°C wurden 300 ml Methanol zugegeben, der kristallin ausgeschiedene Farbstoff abgesaugt, erst mit Methanol, dann Wasser gewaschen und bei 70°C im Vakuum getrocknet. Die Ausbeute betrug 32,9 g. Der Farbstoff hat die Formel 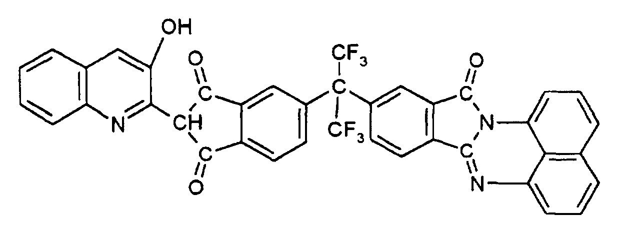 der außerdem etwa gleiche Anteile von je 15 % des beidseitigen Chinophthalon- und Perinonfarbstoffs enthält. Der Farbstoff ist bis 300°C thermostabil und besitzt bei dieser Temperatur eine sehr gute Sublimierechtheit.

### Beispiel 13

100 g Phenol von 60°C wurden unter Rühren mit 9,7 g 3-Hydroxy-4-chlor-chinaldin (0,05 mol) Naphthylen-diamin-1,8 (0,05 mol) und 18,5 g Isopropyliden-bis-phthalsäure-anhydrid versetzt. Dann erwärmte man das Gemisch auf 170 bis 175°C und hielt die Temperatur für 12 Stunden. Nach Abkühlen auf 60°C wurde mit 300 ml Methanol verdünnt und der kristallin ausgefallene Farbstoff abgesaugt, erst mit Methanol, dann mit Wasser gewaschen und danach bei 70°C im Vakuum getrocknet.

Die Ausbeute betrug 27,7 g eines orange-farbenen Farbstoffs der Formel

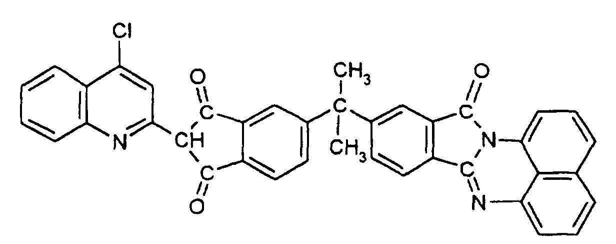

Außerdem liegt auch ein Teil als beidseitiges Hydroxy-chinophthalon (10%) und beidseitiges Perinon (10 %) vor. Der Farbstoffist bis 300°C thermostabil und besitzt bei dieser Temperatur eine sehr gute Sublimierechtheit.

### Beispiel 14

100 ml Phenol wurden bei 60°C mit 5,1 g Hydroxychinaldincarbonsäure (0,025 mol), 4,0 g 1,8-Naphthalindiamin (0,025 mol) und 7,8 g des Ethers aus 3-Hydroxyphthalsäureanhydrid (0,025mol) der Formel 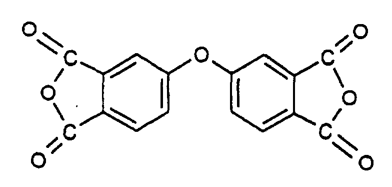 versetzt und auf 175°C erwärmt. Diese Temperatur wurde 13Std. aufrecht erhalten, dabei destillierte das Reaktionswasser ab. Dann wurde bei 60°C 400ml Methanol zugegeben und der kristalline Farbstoffniederschlag abfiltriert, erst mit Methanol dann mit Wasser gewaschen und danach getrocknet.
Ausbeute: 12,5g

Der orange Farbstoff besitzt die Formel

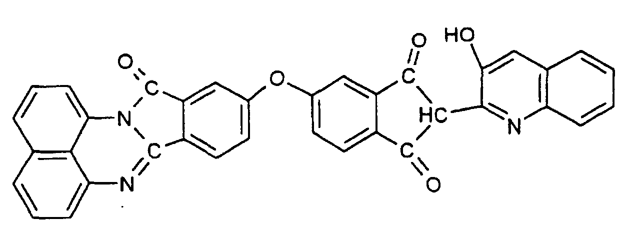

Gemäß thermogravimetrischer Analyse ergibt sich selbst bei 400°C eine ausgezeichnete Sublimierechtheit.

### Beispiel 15

150ml Phenol wurden unter Rühren bei 60°C mit 20,4g Hydroxychinalindincarbonsäure (0,1 mol) und 15,6 g des Ethers aus 3-Hydroxyphthalsäureanhydrid (0,05 mol) mit der Formel wie in Beispiel 14 versetzt und auf 175°C erwärmt. Diese Temperatur wurde 15 Std. aufrecht erhalten. Reaktionswasser wurde dabei abdestilliert. Dann wurde bei 60°C mit 400ml Methanol verdünnt und der kristalline Farbstoffniederschlag abfiltriert, mit Methanol und danach mit Wasser gewaschen und getrocknet.
Ausbeute: 26,2 g = 88 % d. Th.

Der gelbe Farbstoff besitzt die Formel

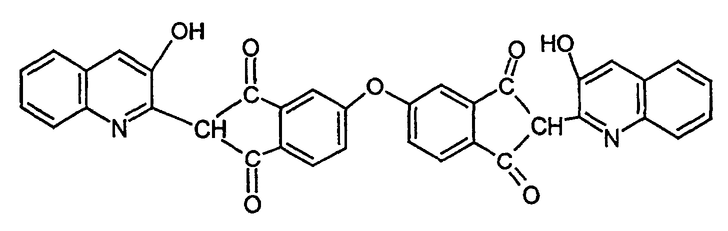

Es ergibt sich selbst bei 400°C eine ausgezeichnete Sublimierechtheit.

### Beispiel 17

100 ml Phenol wurden bei 60°C mit 5,1 g Hydroxychinaldincarbonsäure (0,025 mol), 4,0 g 1,8-Naphthalindiamin (0,025 mol) und 8,5 g des Esteranhydrids (0,025 mol) der Formel 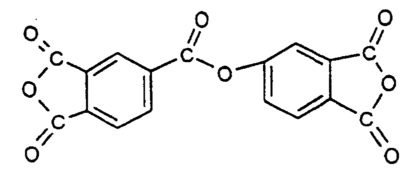 versetzt, auf 175°C erwärmt und 20 Std. bei 170-175°C gehalten. Dabei destillierte Reaktionswasser ab. Dann ließ man auf 60°C abkühlen und gab 400 ml Methanol zu. Der auskristallisierte Farbstoff wurde abfiltriert, erst mit Methanol und dann mit Wasser gewaschen und getrocknet.
Ausbeute: 14,6 g

Der Farbstoff besitzt die Formel

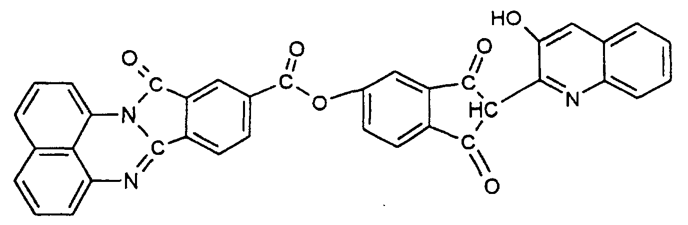

Er zeigte selbst bei 400°C eine ausgezeichnete Sublimierechheit.

### Beispiel 18

150 ml Phenol wurden bei 60°C mit 17 g des Esteranhydrids mit der Formel wie in Beispiel 17 (0,05 mol) und 20,4 Hydroxychinaldincarbonsäure (0,1 mol) versetzt, auf 175°C erwärmt und 20 Std. bei dieser Temperatur verrührt. Dabei destillierte Reaktionswasser ab. Danach ließ man auf 60°C abkühlen und gab 400 ml Methanol zu. Der auskristallisierte Farbstoff wurde abfiltriert, erst mit Methanol, dann mit Wasser gewaschen und getrocknet.
Ausbeute: 27,3 g = 91 % d.Th.

Der Farbstoff besitzt die Formel

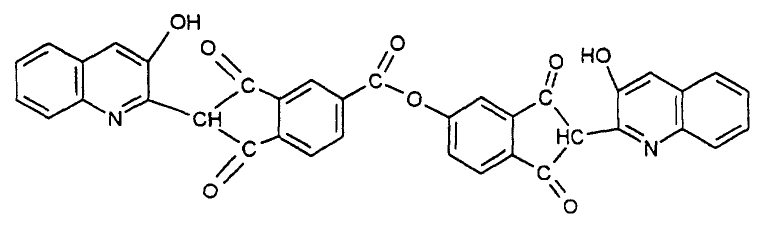

Er zeigte selbst bei 400°C eine ausgezeichnete Sublimierechheit.

### Beispiel 19

150 ml Phenol wurden bei 60°C unter Rühren und Überleiten von Stickstoff mit 17 g des Esteranhydrids (0,05 mol) (Formel wie in Beispiel 17) und 16 g 1,8-Naphthalindiamin (0,1 mol) versetzt, auf 175°C erwärmt und 13 Std. bei dieser Temperatur gehalten. Dabei wurde das Reaktionswasser abdestilliert. Nach Abkühlen auf 60°C wurden 400 ml Methanol zugegeben. Der auskristallisierte Farbstoff wurde abfiltriert, erst mit Methanol und danach mit Wasser gewaschen und getrocknet.
Ausbeute: 27,1 g = 93 % d.Th.

Der rote Farbstoffbesitzt die Formel

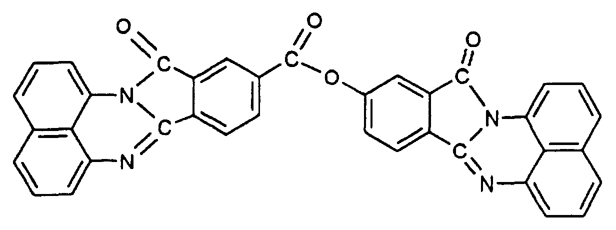

Er zeigte selbst bei 400°C eine ausgezeichnete Sublimierechheit

### Beispiel 20

150 ml Phenol wurden bei 60°C aufgeschmolzen und 10,2 g Hydroxychinaldincarbonsäure (0,05 mol) sowie 20,5 g des Diesteranhydrids (0,05 mol) der Formel 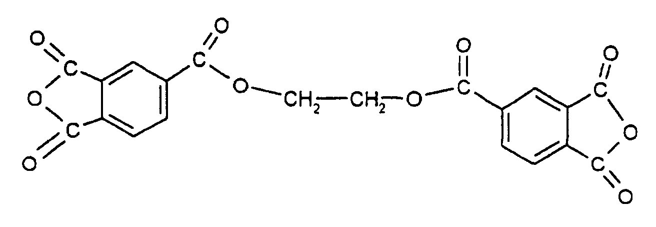 und 8,0 g 1,8-Naphthalindiamin (0,05 mol) zugegeben. Unter Stickstoff wurde auf 175°C geheizt und 20 Std. bei 170-175°C gehalten. Dabei destillierte Reaktionswasser ab. Anschließend kühlte man auf 60°C und gab 400 ml Methanol zu. Der auskristallisierte Farbstoff wurde abfiltriert, mit Methanol und dann mit Wasser gewaschen und getrocknet.
Ausbeute: 29,7 g

Der orange Farbstoff besitzt die Formel

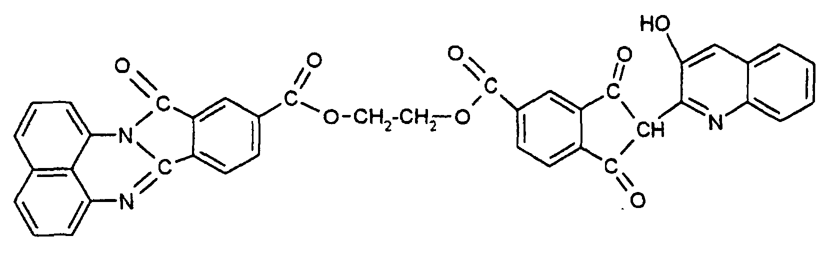

Er zeigte selbst bei 400°C eine ausgezeichnete Sublimierechheit

### Beispiel 21

150 ml Phenol wurden bei 60°C aufgeschmolzen und mit 20,4 g Hydroxychinaldincarbonsäure (0,1 mol) sowie 20,5 g des Diesteranhydrids (0,05 mol) der Formel 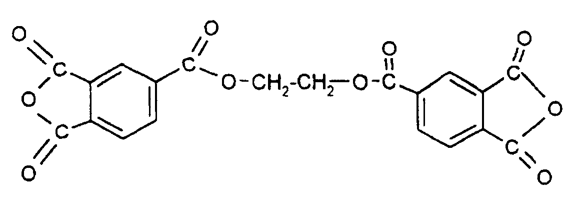 versetzt. Unter Stickstoff wurde auf 175°C geheizt und 20 Std. bei dieser Temperatur gehalten. Dabei destillierte Reaktionswasser ab. Dann wurde auf 60°C abgekühlt und mit Methanol der gelbe Farbstoff ausgefällt, abfiltriert, mit Methanol und mit Wasser gewaschen und getrocknet. Der Farbstoffbesitzt die Formel 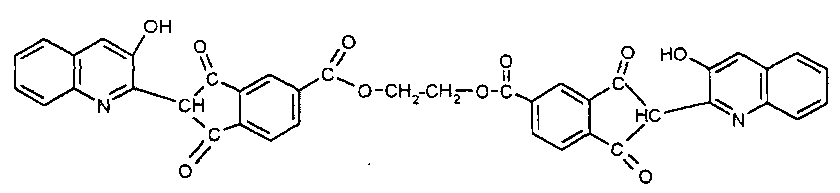 Ausbeute: 30,8 g = 89 % d.Th.

### Färbebeispiel

100 g Polypropylen-Granulat und 0.1 g des Farbstoffs aus Beispiel 21 wurden in einem Trommelmischer unter Zusatz von einigen Tropfen Propylenglykol als Haftvermittler 15 Minuten lang vermischt. Das mit Farbstoff äußerlich belegte Polypropylen-Granulat wurde dann bei 280°C auf einer Schneckenspritzgußmachine verarbeitet. Man erhielt transparente gelbe Platten von sehr guter Lichtechtheit. Die Färbungen zeigen kein Ausbluten. Wenn man dem Farbstoff noch zusätzlich 2 % Titandioxid zufügte, erhielt man farbstarke gedeckte Färbungen.

## Patentansprüche

1. Verbindungen der allgemeinen Formel (I) oder deren tautomeren Formen 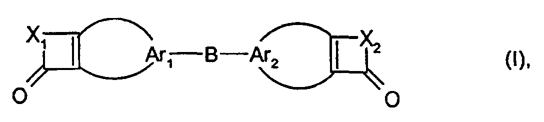 worin
Ar₁ und Ar₂ unabhängig voneinander Reste zur Vervollständigung unsubstituierter oder substituierter carbocyclischer Aromaten bedeuten, wobei als mögliche Substituenten C₁-C₆-Alkyl, Halogen, Alkyl- und Arylcarbonyl, Alkyl- und Arylsulfonyl, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder ein ankondensierter cycloaliphatischer oder heterocyclischer Ring, in Frage kommen
B eine gegebenenfalls durch CF₃ substituierte Alkylengruppe, die sowohl geradkettig oder verzweigt sein kann oder einen Rest der Formel 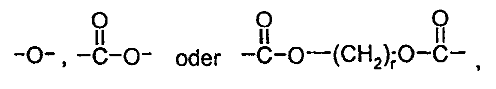 worin r fiir eine Zahl von 1-4 steht,
bedeutet, dessen Enden jeweils an ein aromatisches C-Atom der beiden Reste Ar₁ und Ar₂ gebunden sind,
und
X₁ und X₂ unabhängig voneinander für einen Rest der Formeln ausgewählt aus der Gruppe 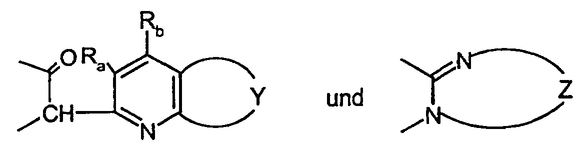 stehen, wobei sie jeweils so im Ring angeordnet sind, dass die 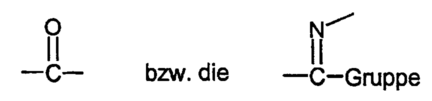 benachbart zur C-C-Doppelbindung steht,
worin
Y den Rest eines gegebenenfalls substituierten Benzol- oder Naphthalinringes bildet, wobei als mögliche Substituenten Halogen, -COOH, -COOR, wobei R für C₁-C₁₀-Alkyl, C₆-C₁₀-Aryl oder C₅-C₈-Cycloalkyl steht und C₁-C₆-Alkyl, in Frage kommen,
Z gegebenenfalls substituiertes ortho-Phenylen, ortho-Naphthylen, peri-(1,8)-Naphthylen oder Arylen aus mehr als zwei miteinander kondensierten Benzolringen bedeutet, wobei die Arylreste, die mehr als zwei miteinander kondensierte Benzolringe aufweisen, in ortho- oder entsprechend einer peri-Stellung im Naphthalin verbrückt sind, wobei als mögliche Substituenten C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder ein ankondensierter cycloaliphatischer oder heterocyclischer Ring in Frage kommen,
Rₐ H oder OH bedeuten und
R_{b} H oder Halogen, insbesondere F, Br und Cl bedeutet
mit Ausnahme von Verbindungen, worin X₁ und X₂ für einen Rest der Formel 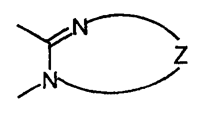 stehen, wobei Z die oben angegebene Bedeutung hat und
B einem Rest der Formel 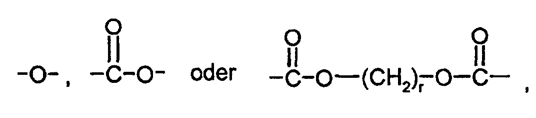
bedeutet, worin r die oben genannte Bedeutung besitzt.

2. Verbindungen gemäß Anspruch 1, **dadurch gekennzeichnet, dass** Ar₁ und Ar₂ unabhängig voneinander einen Rest zur Vervollständigung eines gegebenenfalls substituierten Benzol- oder Naphthalinringes, insbesondere eines gegebenenfalls substituierten Benzolringes bedeuten.

3. Verbindungen gemäß Anspruch 1, die der Formel (II) oder deren tautomeren Formen entsprechen 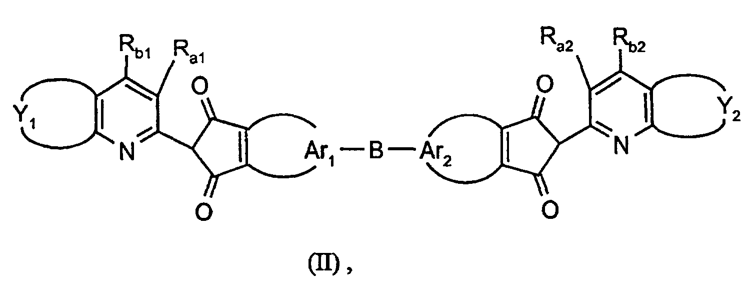 worin
Y₁ und Y₂ unabhängig voneinander den Rest eines gegebenenfalls substituierten Benzol- oder Naphthalinringes bilden,
Rₐ₁ und Rₐ₂ unabhängig voneinander H oder OH bedeuten und
R_{b1} und R_{b2} unabhängig voneinander H oder Halogen, insbesondere F, Br oder Cl bedeuten.

4. Verbindungen gemäß Anspruch 3, die der Formel (IIa) oder deren tautomeren Formen entsprechen 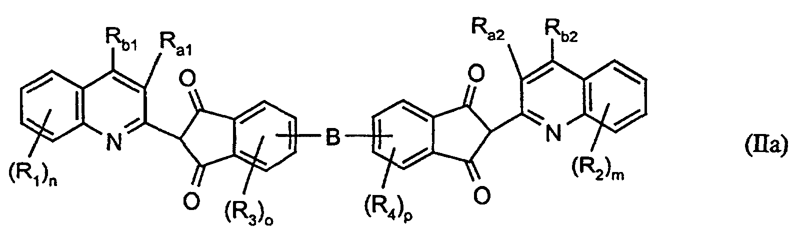 worin
n und m unabhängig voneinander für eine Zahl von 0 bis 4 stehen,
R₁ und R₂ unabhängig voneinander jeweils gleich oder verschieden sind und Halogen, insbesondere Cl und Br, -COOH, -COOR, wobei R fiir C₁-C₁₀-Alkyl, insbesondere Methyl und Ethyl, C₆-C₁₀-Aryl oder C₅-C₈-Cycloalkyl steht und C₁-C₆-Alkyl, insbesondere Methyl bedeuten,
o und p unabhängig voneinander eine Zahl von 0 bis 2, insbesondere 0 oder 1 bedeuten,
R₃ und R₄ unabhängig voneinander jeweils gleich oder verschieden sind und C₁-C₆-Alkyl, insbesondere Methyl, Ethyl, n-Propyl, iso-Propyl, n-, sek- und tert.-Butyl, Halogen, insbesondere Cl und Br, Alkyl- und Arylcarbonyl, Alkyl- und Arylsulfonyl, Nitro, Aryl, insbesondere gegebenenfalls substituiertes Phenyl, Aryloxysulfonyl, insbesondere -SO₂OC₆H₅, Hydroxy, C₁-C₆-Alkoxy, wie Methoxy oder Benzyloxy, Aryloxy, wie Phenoxy, gegebenenfalls durch Alkyl oder Acyl substituiertes Amino wie NH₂, NHCOCH₃ und -N(C₂H₅)₂, gegebenenfalls durch Alkyl oder Aryl substituiertes Aminosulfonyl wie SO₂N(CH₃)₂ und SO₂NHCH₃ oder einen ankondensierten cycloaliphatischen oder heterocyclischen Ring bedeuten.

5. Verbindungen gemäß Anspruch 1, **dadurch gekennzeichnet, dass** B eine gegebenenfalls durch CF₃ substituierte C₁-C₅-Alkylengruppe, die sowohl geradkettig oder verzweigt sein kann oder ein Rest der Formel 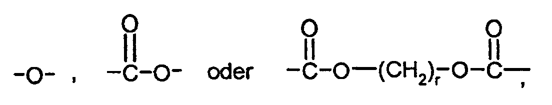 mit r = 2 bis 4 ist.

6. Verbindungen gemäß Anspruch 1, **dadurch gekennzeichnet, dass** B für einen Rest der Formeln
-CH₂-, -CH₂-CH₂-, -CH₂CH₂CH₂-, -CH₂CH₂CH₂CH₂-, 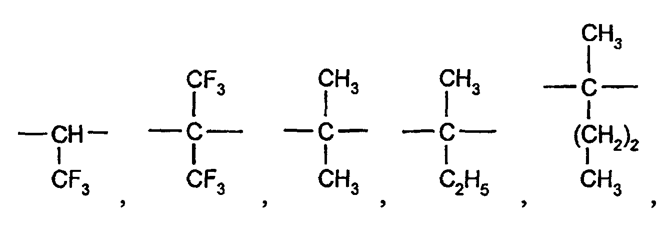 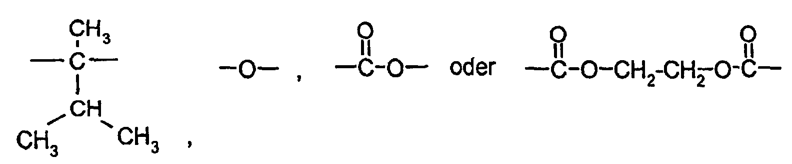 steht.

7. Verbindungen gemäß Anspruch 4, die der Formel (IIb) oder deren tautomeren Formen entsprechen

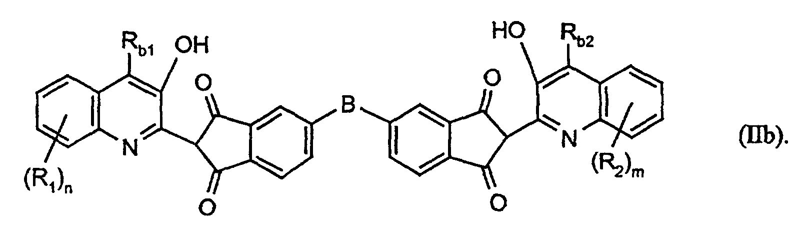

8. Verbindungen gemäß Anspruch 1, die der Formel (III) oder deren tautomeren Formen entsprechen 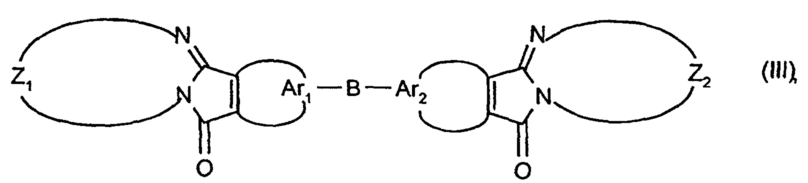 worin
Z₁ und Z₂ unabhängig voneinander gegebenenfalls substituiertes ortho-Phenylen, ortho-Naphthylen, peri-(1,8)-Naphthylen oder Arylen aus mehr als zwei miteinander kondensierten Benzolringen bedeuten, wobei die Arylreste, die mehr als zwei miteinander kondensierte Benzolringe aufweisen, in ortho- oder entsprechend einer peri-Stellung im Naphthalin verbrückt sind.

9. Verbindungen gemäß Anspruch 8, worin die Reste Z₁ und Z₂ unabhängig voneinander einem gegebenenfalls substituierten peri-(1,8)-Naphthylen entsprechen.

10. Verbindungen gemäß Anspruch 8, die der Formel (IIIa) entsprechen 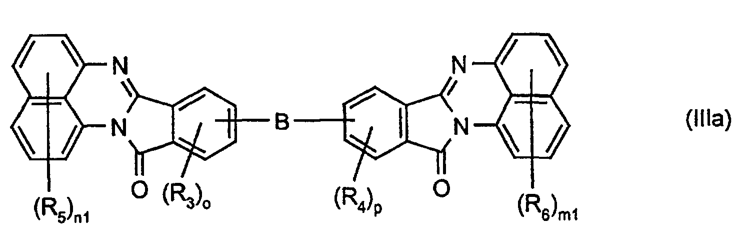 worin
n₁ und m₁ unabhängig voneinander für eine Zahl von 0 bis 4 stehen,
R₅ und R₆ unabhängig voneinander jeweils gleich oder verschieden sind und C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder einen ankondensierten cycloaliphatischen oder heterocyclischen Ring bedeuten, insbesondere für Halogen und C₁-C₆-Alkyl, stehen,
o und p unabhängig voneinander eine Zahl von 0 bis 2, insbesondere 0 oder 1, bedeuten,
R₃ und R₄ unabhängig voneinander jeweils gleich oder verschieden sind und C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder einen ankondensierten cycloaliphatischen oder heterocyclischen Ring bedeuten, inbesondere Halogen, NO₂, -NH₂, -NH-Acyl oder -NH-Alkyl bedeuten.

11. Verbindungen gemäß Anspruch 10, die der Formel (IIIb) entsprechen

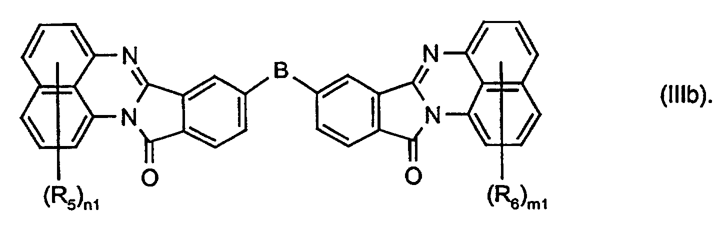

12. Verbindungen gemäß Anspruch 1, die der Formel (IV) oder deren tautomeren Formen

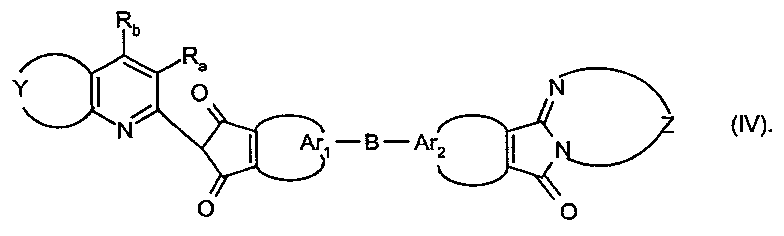

13. Verbindungen gemäß Anspruch 12, die der Formel (IVa) oder deren tautomeren Formen entsprechen 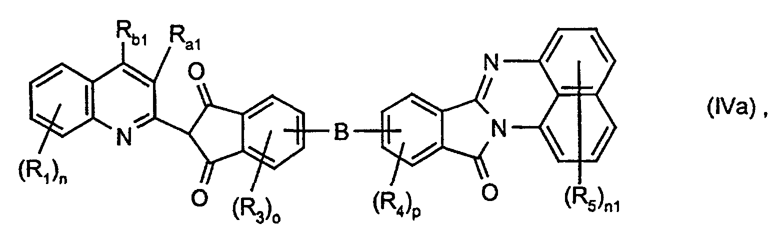 worin
Rₐ₁ und Rₐ₂ unabhängig voneinander H oder OH bedeuten, und
R_{b1} und R_{b2} unabhängig voneinander H oder Halogen, insbesondere F, Br oder Cl bedeuten,
n und n₁ unabhängig voneinander für eine Zahl von 0 bis 4 stehen,
R₁ Halogen, insbesondere Cl und Br, -COOH, -COOR, wobei R für C₁-C₁₀-Alkyl, insbesondere Methyl und Ethyl, C₆-C₁₀-Aryl oder C₅-C₈-Cycloalkyl steht oder C₁-C₆-Alkyl, insbesondere Methyl bedeuten,
o und p unabhängig eine Zahl von 0 bis 2, insbesondere 0 oder 1 bedeuten,
R₃ und R₄ unabhängig voneinander jeweils gleich oder verschieden sind, C₁-C₆-Alkyl, insbesondere Methyl, Ethyl, n-Propyl, iso-Propyl, n-, sek- und tert.-Butyl, Halogen, insbesondere Cl und Br, Alkyl- und Arylcarbonyl, Alkyl- und Arylsulfonyl, Nitro, Aryl, insbesondere gegebenenfalls substituiertes Phenyl, Aryloxysulfonyl, insbesondere -SO₂OC₆H₅, Hydroxy, C₁-C₆-Alkoxy, wie Methoxy oder Benzyloxy, Aryloxy, wie Phenoxy, gegebenenfalls durch Alkyl oder Acyl substituiertes Amino wie NH₂, NHCOCH₃ und -N(C₂H₅)₂, gegebenenfalls durch Alkyl oder Aryl substituiertes Aminosulfonyl wie SO₂N(CH₃)₂ und SO₂NHCH₃ oder einen ankondensierten cycloaliphatischen oder heterocyclischen Ring bedeuten, und
R₅ C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder einen ankondensierteeen cycloaliphatischen oder heterocyclischen Ring bedeuten, insbesondere für Halogen und C₁-C₆-Alkyl steht.

14. Verbindungen gemäß Anspruch 13, die der Formel (IVb) oder deren tautomeren Formen entsprechen

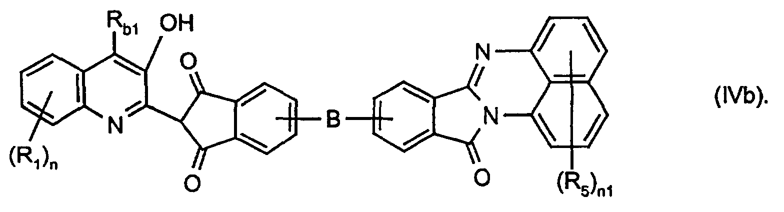

15. Verfahren zur Herstellung der erfindungsgemäßen Verbindungen der Formel (I) gemäß Anspruch 1, das **dadurch gekennzeichnet ist, dass** man Tetracarbonsäuren oder deren Anhydride der Formel (V) 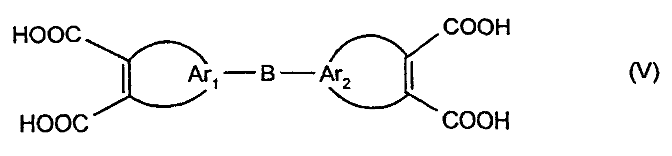 mit einer oder mehreren Verbindungen der Formeln (VI) und/oder (VII) 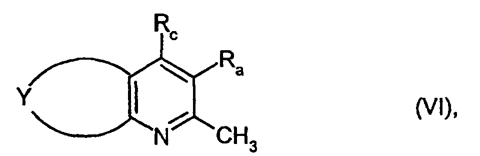 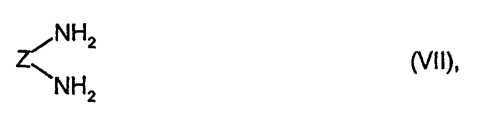 worin
R_{c} H, COOH oder Halogen, insbesondere F, Br und Cl bedeuten, insbesondere für H oder COOH steht und
Ar₁, Ar₂ B, Y, Z und Rₐ die in Anspruch 1 angegebene Bedeutung besitzen,
kondensiert, wobei die Summe der Verbindungen der Formeln (VI) und (VII) zwei Mol-Äquivalenten, bezogen auf die Tetracarbonsäure (V), entspricht.

16. Verbindungen der Formel (V) oder deren Anhydride, 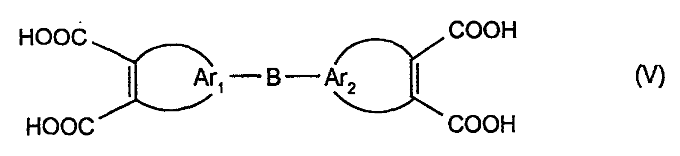 worin
Ar₁ und Ar₂ unabhängig voneinander Reste zur Vervollständigung gegebenenfalls substituierter carbocyclischer Aromaten bedeuten, und
B einen Rest der Formel
-CH₂CH₂CH₂CH₂-, 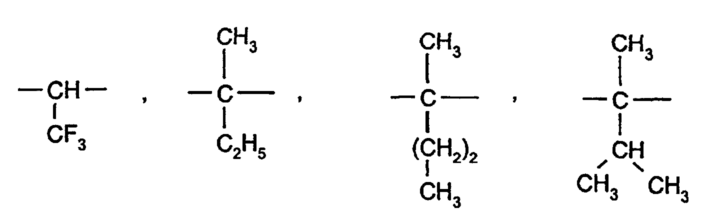 oder 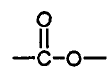
bedeutet.

17. Verwendung einer Verbindung gemäß Anspruch 1 zum Massefärben von Kunststoffen.

18. Kunststoffe, gefärbt mit wenigstens einer Verbindung gemäß Anspruch 1.

## Claims

1. Compounds of the general formula (I) or tautomeric forms thereof 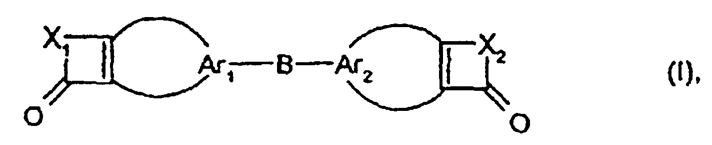 wherein
Ar₁ and Ar₂ independently of one another denote radicals to complete unsubstituted or substituted carbocyclic aromatic rings, possible substituents being C₁-C₆-alkyl, halogen, alkyl- and arylcarbonyl, alkyl- and arylsulphonyl, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring,
B denotes an optionally CF₃-substituted alkylene group, which can be either straight-chained or branched, or a radical of the formula 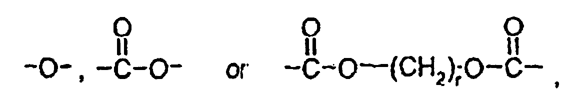 wherein r represents a number from 1 to 4,
the ends of which are in each case bonded to an aromatic C atom of the two radicals Ar₁ and Ar₂,
and
X₁ and X₂ independently of one another represent a radical of the formulae chosen from the group consisting of 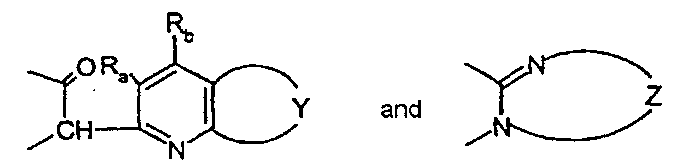 these being in each case located in the ring such that the 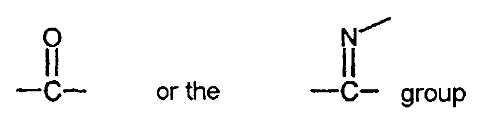 is adjacent to the C-C double bond,
wherein
Y forms the radical of an optionally substituted benzene or naphthalene ring, possible substituents being halogen, -COOH, -COOR, wherein R represents C₁-C₁₀-alkyl, C₆-C₁₀-aryl or C₅-C₈-cycloalkyl, and C₁-C₆-alkyl,
Z denotes optionally substituted ortho-phenylene, ortho-naphthylene, peri-(1,8)-naphthylene or arylene comprising more than two benzene rings fused to one another, the aryl radicals which contain more than two benzene rings fused to one another being bridged in the ortho-position or corresponding to a peri-position in naphthalene, possible substituents being C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring,
Rₐ denotes H or OH and
R_{b} denotes H or halogen, in particular F, Br and Cl,
with the exception of compounds wherein X₁ and X₂ represent a radical of the formula 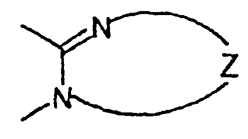 where Z has the abovementioned meaning and
B is a radical of the formula 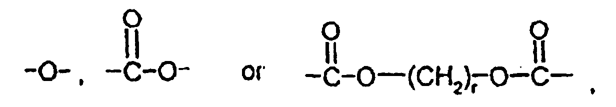
wherein r has the abovementioned meaning.

2. Compounds according to Claim 1, **characterized in that** Ar₁ and Ar₂ independently of one another denote a radical for completion of an optionally substituted benzene or naphthalene ring, in particular an optionally substituted benzene ring.

3. Compounds according to Claim 1, which correspond to the formula (II) or tautomeric forms thereof 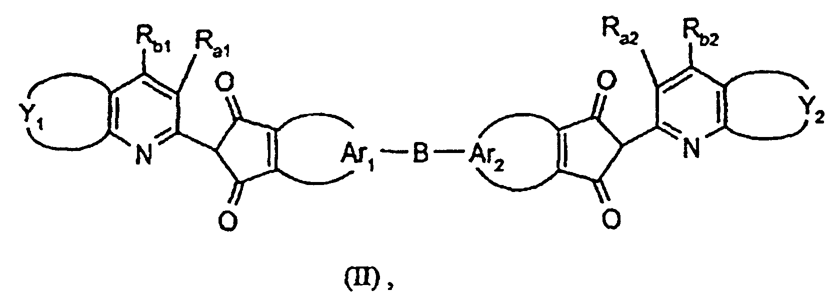 wherein
Y₁ and Y₂ independently of one another form the radical of an optionally substituted benzene or naphthalene ring,
Rₐ₁ and Rₐ₂ independently of one another denote H or OH, and
R_{b1} and R_{b2} independently of one another denote H or halogen, in particular F, Br or Cl.

4. Compounds according to Claim 3, which correspond to the formula (IIa) or tautomeric forms thereof 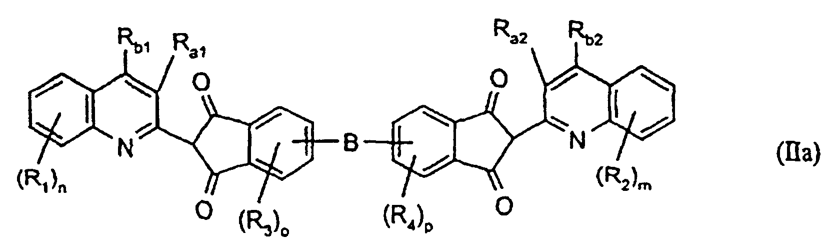 wherein
n and m independently of one another represent a number from 0 to 4,
R₁ and R₂ independently of one another are in each case identical or different and denote halogen, in particular Cl and Br, -COOH, -COOR, wherein R represents C₁-C₁₀-alkyl, in particular methyl and ethyl, C₆-C₁₀-aryl or C₅-C₈-cycloalkyl, and C₁-C₆-alkyl, in particular methyl,
o and p independently of one another denote a number from 0 to 2, in particular 0 or 1, and
R₃ and R₄ independently of one another are in each case identical or different and denote C₁-C₆-alkyl, in particular methyl, ethyl, n-propyl, iso-propyl and n-, sec- and tert-butyl, halogen, in particular Cl and Br, alkyl- and arylcarbonyl, alkyl- and arylsulphonyl, nitro, aryl, in particular optionally substituted phenyl, aryloxysulphonyl, in particular - SO₂OC₆H₅, hydroxyl, C₁-C₆-alkoxy, such as methoxy or benzyloxy, aryloxy, such as phenoxy, amino which is optionally substituted by alkyl or acyl, such as NH₂, NHCOCH₃ and -N(C₂H₅)₂, aminosulphonyl which is optionally substituted by alkyl or aryl, such as SO₂N(CH₃)₂ and SO₂NHCH₃, or a fused-on cycloaliphatic or heterocyclic ring.

5. Compounds according to Claim 1, **characterized in that** B is an optionally CF₃-substituted C₁-C₅-alkylene group, which can be either straight-chained or branched, or a radical of the formula 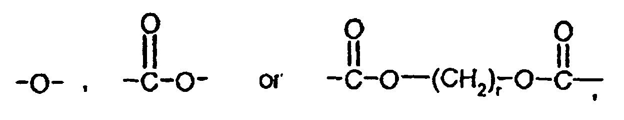 where r = 2 to 4.

6. Compounds according to Claim 1, **characterized in that** B represents a radical of the formulae
-CH₂-, -CH₂-CH₂-, -CH₂CH₂CH₂-, -CH₂CH₂CH₂CH₂-,

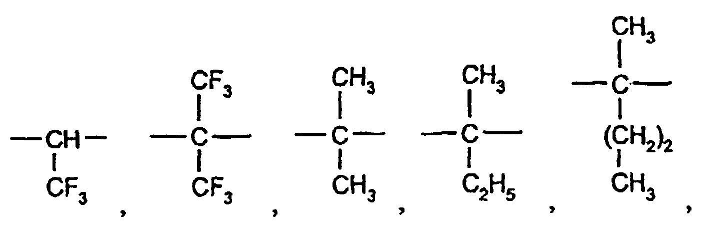

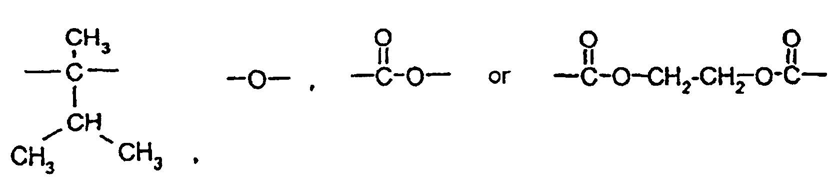

7. Compounds according to Claim 4, which correspond to the formula (IIb) or tautomeric forms thereof

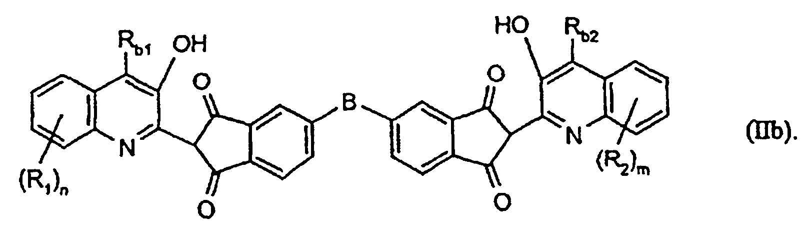

8. Compounds according to Claim 1, which correspond to the formula (III) or tautomeric forms thereof 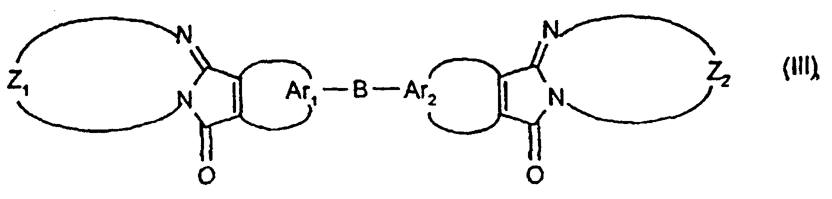 wherein
Z₁ and Z₂ independently of one another denote optionally substituted ortho-phenylene, orthonaphthylene, peri-(1,8)-naphthylene or arylene comprising more than two benzene rings fused to one another, wherein the aryl radicals which contain more than two benzene rings fused to one another are bridged in the ortho-position or corresponding to a peri-position in naphthalene.

9. Compounds according to Claim 8, wherein the radicals Z₁ and Z₂ independently of one another correspond to an optionally substituted peri-(1,8)-naphthylene.

10. Compounds according to Claim 8, which correspond to the formula (IIIa) 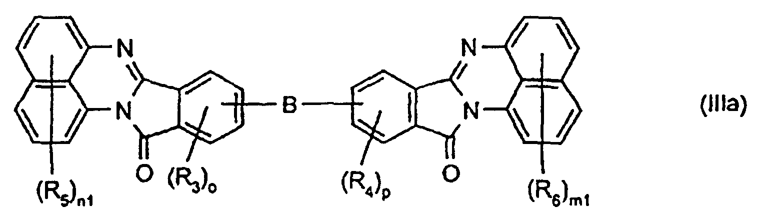 wherein
n₁ and m₁ independently of one another represent a number from 0 to 4,
R₅ and R₆ independently of one another are in each case identical or different and denote C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring, in particular represent halogen and C₁-C₆-alkyl,
o and p independently of one another denote a number from 0 to 2, in particular 0 or 1, and
R₃ and R₄ independently of one another are in each case identical or different and denote C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring, in particular halogen, NO₂, -NH₂, -NH-acyl or -NH-alkyl.

11. Compounds according to Claim 10, which correspond to the formula (IIIb)

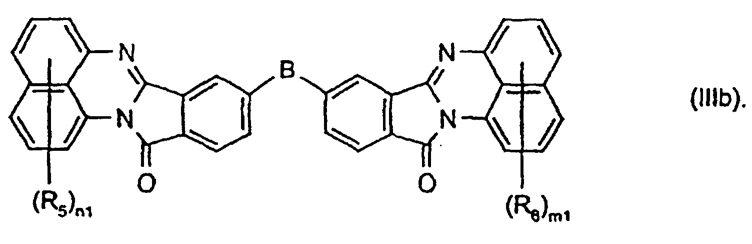

12. Compounds according to Claim 1, which correspond to the formula (IV) or tautomeric forms thereof

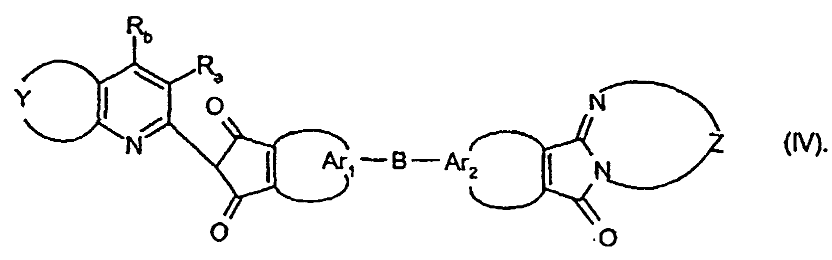

13. Compounds according to Claim 12, which correspond to the formula (IVa) or tautomeric forms thereof 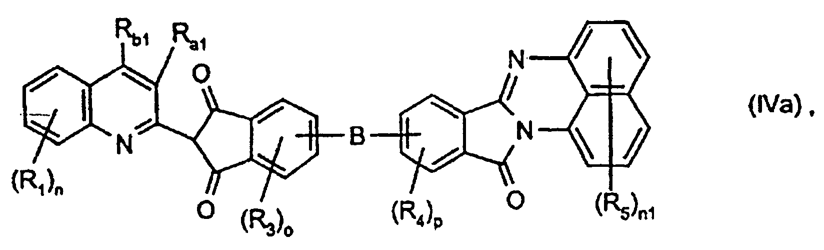 wherein
Rₐ₁ and Rₐ₂ independently of one another denote H or OH and
R_{b1} and R_{b2} independently of one another denote H or halogen, in particular F, Br or Cl,
n and n₁ independently of one another represent a number from 0 to 4,
R₁ denotes halogen, in particular Cl and Br, -COOH, -COOR wherein R represents C₁-C₁₀-alkyl, in particular methyl and ethyl, C₆-C₁₀-aryl or C₅-C₈-cycloalkyl, or C₁-C₆-alkyl, in particular methyl,
o and p independently denote a number from 0 to 2, in particular 0 or 1,
R₃ and R₄ independently of one another are in each case identical or different and denote C₁-C₆-alkyl, in particular methyl, ethyl, n-propyl, iso-propyl and n-, sec- and tert-butyl, halogen, in particular Cl and Br, alkyl- and arylcarbonyl, alkyl- and arylsulphonyl, nitro, aryl, in particular optionally substituted phenyl, aryloxysulphonyl, in particular -SO₂OC₆H₅, hydroxyl, C₁-C₆-alkoxy, such as methoxy or benzyloxy, aryloxy, such as phenoxy, amino which is optionally substituted by alkyl or acyl, such as NH₂, NHCOCH₃ and -N(C₂H₅)₂, aminosulphonyl which is optionally substituted by alkyl or aryl, such as SO₂N(CH₃)₂ and SO₂NHCH₃, or a fused-on cycloaliphatic or heterocyclic ring, and
R₅ denotes C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring, in particular represents halogen and C₁-C₆-alkyl.

14. Compounds according to Claim 13, which correspond to the formula (IVb) or tautomeric forms thereof

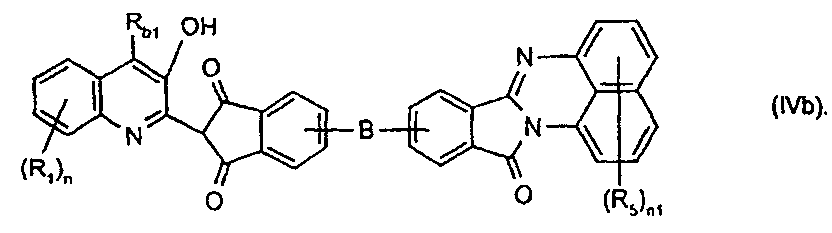

15. Process for the preparation of the compounds of the formula (I) according to the invention, according to Claim 1, which is **characterized in that** tetracarboxylic acids or anhydrides thereof, of the formula (V) 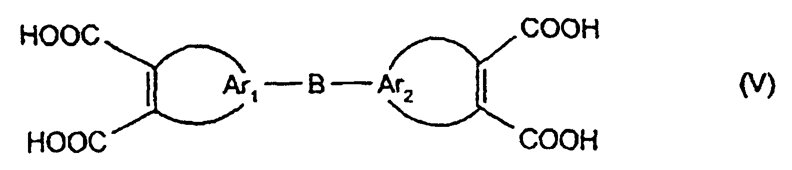 are subjected to a condensation reaction with one or more compounds of the formulae (VI) and/or (VII) 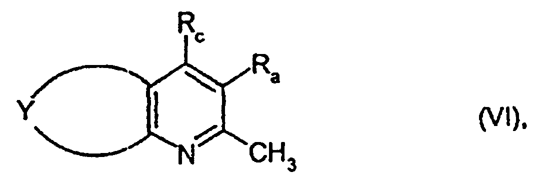 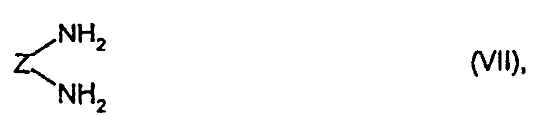 wherein
R_{c} denotes H, COOH or halogen, in particular F, Br and Cl, in particular represents H or COOH, and
Ar₁, Ar₂, B, Y, Z and Rₐ have the meaning given in Claim 1,
the sum of the compounds of the formulae (VI) and (VII) corresponding to two molar equivalents, based on the tetracarboxylic acid (V).

16. Compounds of the formula (V) or anhydrides thereof 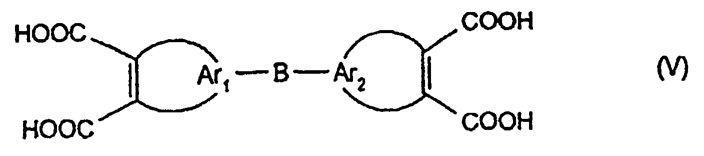 wherein
Ar₁ and Ar₂ independently of one another denote radicals to complete optionally substituted carbocyclic aromatic rings, and
B denotes a radical of the formula
-CH₂CH₂CH₂CH₂-, 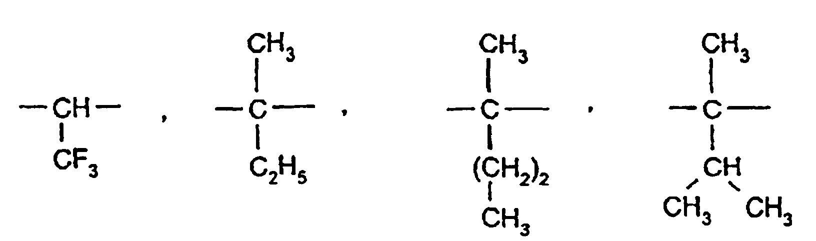 or

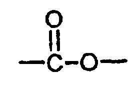

17. Use of a compound according to Claim 1 for bulk dyeing of plastics.

18. Plastics dyed with at least one compound according to Claim 1.

## Revendications

1. Composés de formule générale (I) ou leurs formes tautomères 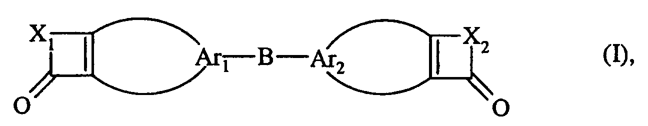 dans laquelle
Ar₁ et Ar₂ représentent chacun, indépendamment l'un de l'autre, des radicaux complétant des groupes aromatiques homogènes substitués ou non, les substituants éventuels consistant en groupes alkyle en C₁-C₆, halogènes, groupes alkyl- et aryl-carbonyle, alkyl- et aryl-sulfonyle, nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou en un noyau cycloaliphatique ou hétérocyclique condensé,
B représente un groupe alkylène éventuellement substitué par CF₃, qui peut être à chaîne droite ou ramifiée, ou un groupe de formules 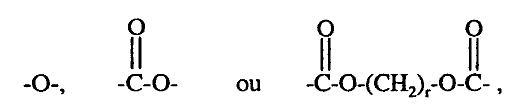
dans lesquelles r est un nombre allant de 1 à 4,
dont les extrémités sont reliées chacune à un atome de carbone aromatique des deux radicaux Ar₁ et Ar₂,
et
X₁ et X₂ représentent chacun, indépendamment l'un de l'autre, un groupe répondant à l'une des formules 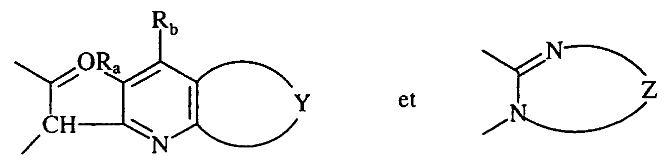
disposé dans le cycle en sorte que le groupe 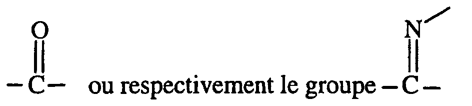 soit voisin de la double liaison C-C,
Y représente le radical d'un cycle benzénique ou naphtalénique éventuellement substitué, les substituants éventuels consistant en halogènes, en groupes -COOH, -COOR, dans lesquels R représente un groupe alkyle en C₁-C₁₀, aryle en C₆-C₁₀ ou cycloalkyle en C₅-C₈, et alkyle en C₁-C₆,
Z représente un groupe ortho-phénylène, ortho-naphtylène, péri-(1,8-naphtylène ou arylène à plus de deux cycles benzéniques condensés entre eux, éventuellement substitué, les groupes aryle à plus de deux cycles benzéniques condensés entre eux étant pontés en ortho ou, en correspondance, en position péri du naphtalène, les substituants éventuels étant des groupes alkyle en C₁-C₆, des halogènes, des groupes nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou un noyau cycloaliphatique ou hétérocyclique condensé.
Rₐ représente H ou OH et
R_{b} représente H ou un halogène, plus spécialement F, Br et Cl,
à l'exception des composés pour lesquels X₁ et X₂ représentent chacun un groupe de formule 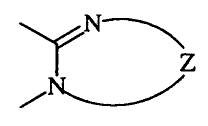 Z ayant les significations indiguées ci-dessus et
B représentant un groupe de formules 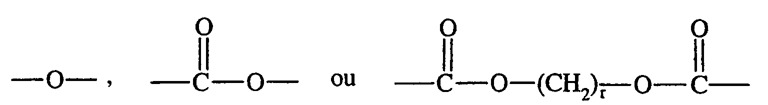
dans lesquelles r a les significations indiquées ci-dessus.

2. Composés selon la revendication 1, **caractérisés en ce que** Ar₁ et Ar₂ représentent chacun, indépendamment l'un de l'autre, un radical complétant un cycle benzénique ou naphtalénique éventuellement substitué, plus spécialement un cycle benzénique éventuellement substitué.

3. Composés selon la revendication 1, répondant à la formule (II), ou leurs formes tautomères 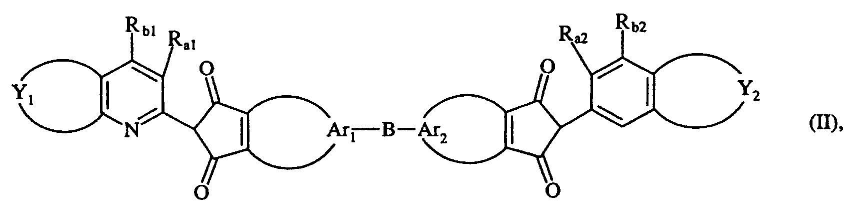 dans laquelle
Y₁ et Y₂ représentent chacun, indépendamment l'un de l'autre, le radical d'un cycle benzénique ou naphtalénique éventuellement substitué,
Rₐ₁ et Rₐ₂ représentent chacun, indépendamment l'un de l'autre, H ou OH, et
R_{b1} R_{b2} représentent chacun, indépendamment l'un de l'autre, H ou un halogène, plus spécialement F, Br ou Cl, et

4. Composés selon la revendication 3, répondant à la formule (IIa), ou leurs formes tautomères 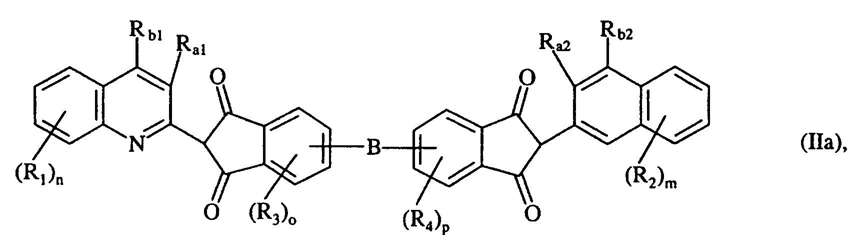 dans laquelle
n et m représentent chacun, indépendamment l'un de l'autre, un nombre allant de 0 à 4,
R₁ et R₂, ayant des significations identiques ou différents, représentent chacun un halogène, plus spécialement Cl ou Br, un groupe -COOH, -COOR dans lequel R représente un groupe alkyle en C₁-C₁₀, plus spécialement méthyle ou éthyle, un groupe aryle en en C₆-C₁₀ ou cycloalkyle en C₅-C₈, ou un groupe alkyle en C₁-C₆, plus spécialement méthyle,
o et p représentent chacun, indépendamment l'un de l'autre, un nombre allant de 0 à 2, plus spécialement 0 ou 1,
R₃ et R₄ ayant des significations identiques ou différentes, représentent chacun, indépendamment l'un de l'autre, un groupe alkyle en C1-C6, plus spécialement méthyle, éthyle, n-propyle, isopropyle, n-, sec- ou tert-butyle, un halogène, plus spécialement Cl ou Br, un groupe alkyl- ou aryl-carbonyle, alkyl- ou aryl-sulfonyle, nitro, aryle, plus spécialement phényle éventuellement substitué, aryloxysulfonyle, plus spécialement -SO₂OC₆H₅, hydroxy, alcoxy en C₁-C₆ tel que méthoxy ou benzyloxy, aryloxy tel que phénoxy, amino éventuellement substitué par des groupes alkyle ou acyle, tel que NH2, NHCOCH₃ et -N(C₂H₅)₂, aminosulfonyle éventuellement substitué par des groupes alkyle ou aryle, tel que SO₂N(CH₃)₂ et SO₂NHCH₃, ou un noyau cycloaliphatique ou hétérocyclique condensé.

5. Composés selon la revendication 1, **caractérisés en ce que** B représente un groupe alkylène en C₁-C₅ éventuellement substitué par CF₃, et qui peut être à chaîne droite ou ramifiée, ou un groupe de formules 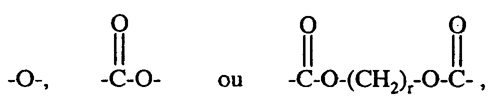 avec r = 2 à 4.

6. Composés selon la revendication 1, **caractérisés en ce que** B représente un groupe répondant à l'une des formules
-CH₂-, -CH₂-CH₂-, -CH₂CH₂CH₂-, -CH₂CH₂CH₂CH₂-,

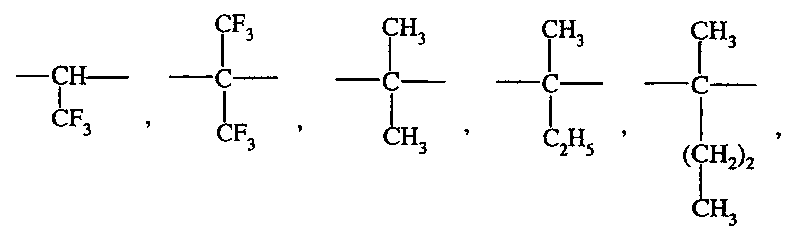

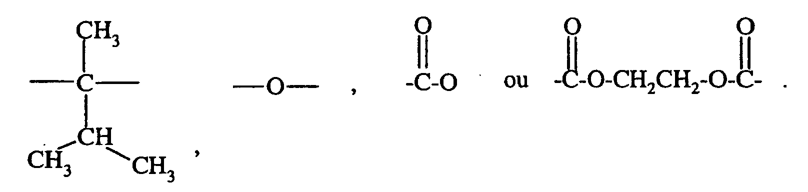

7. Composés selon la revendication 4, répondant à la formule (IIb), ou leurs formes tautomères

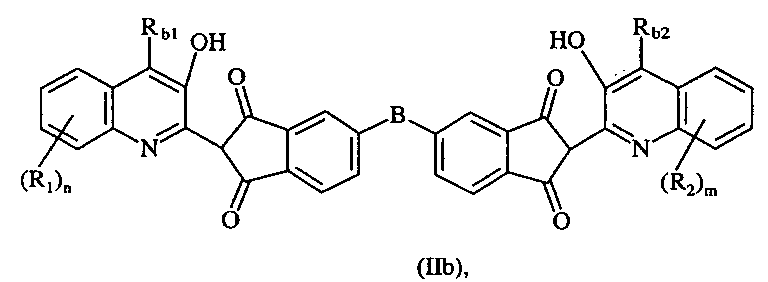

8. Composés selon la revendication 1, répondant à la formule (III), ou leurs formes tautomères 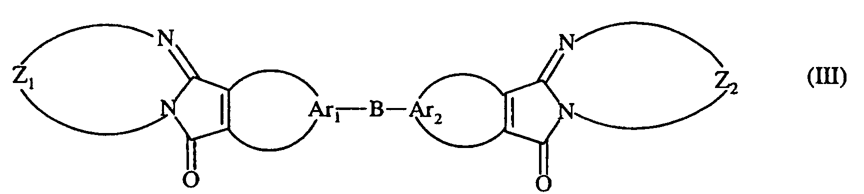 dans laquelle
Z₁ et Z₂ représentent chacun, indépendamment l'un de l'autre, un groupe orthophénylène, ortho-naphtylène, péri-(1,8)-naphtylène ou arylène à plus de deux cycles benzéniques condensés entre eux, éventuellement substitué, les groupes aryle à plus de deux cycles benzéniques condensés entre eux étant pontés en ortho ou en correspondance dans une position péri dans le naphtalène.

9. Composés selon la revendication 8, pour lesquels Z₁ et Z₂ représentent chacun, indépendamment l'un de l'autre, un groupe péri-(1,8)-naphtylène éventuellement substitué.

10. Composés selon la revendication 8 répondant à la formule (IIIa) 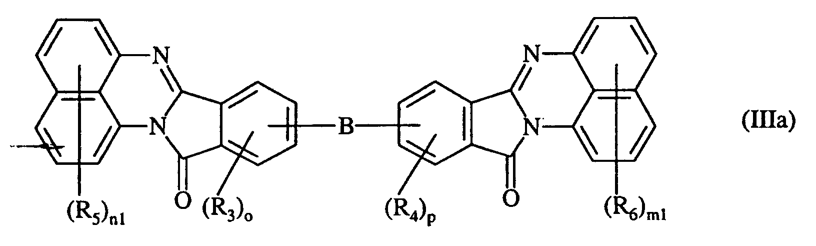 dans laquelle
n₁ et m₁ représentent chacun indépendamment l'un de l'autre, un nombre allant de 0 à 4,
R₅ et R₆, ayant des significations identiques ou différentes, représentent chacun, indépendamment l'un de l'autre, un groupe alkyle en C₁-C₆, un halogène, un groupe nitro, aryle, aryloxysulfonyle, hydroxy, alcoxy en C₁-C₆, aryloxy, amino éventuellement substitué par des groupes alkyle ou acyle, aminosulfonyle éventuellement substitué par les groupes alkyle ou aryle, ou un noyau cycloaliphatique ou hétérocyclique condensé, plus spécialement un halogène ou un groupe alkyle en C₁-C₆,
o et p représentent chacun, indépendamment l'un de l'autre, un nombre allant de 0 à 2 et plus spécialement 0 ou 1,
R₃ et R₄, ayant des significations identiques ou différentes, représentent chacun, un groupe alkyle en C₁-C₆, un halogène, un groupe nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou un noyau cycloaliphatique ou hétérocyclique condensé, plus spécialement un halogène, un groupe NO₂, -NH₂, -NH-acyle ou -NH-alkyle.

11. Composés selon la revendication 10, répondant à la formule (IIIb)

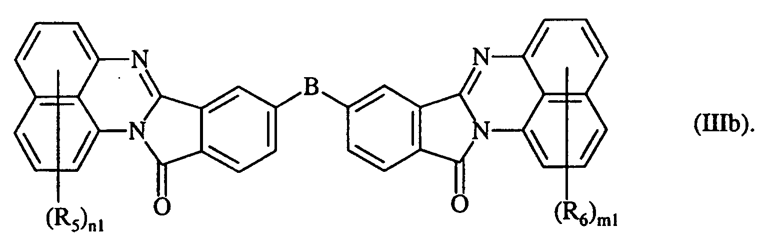

12. Composés selon la revendication 1, répondant à la formule (IV), ou leurs formes tautomères

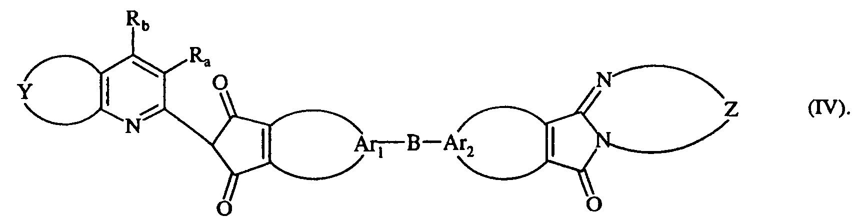

13. Composés selon la revendication 12, répondant à la formule (IVa), ou leurs formes tautomères 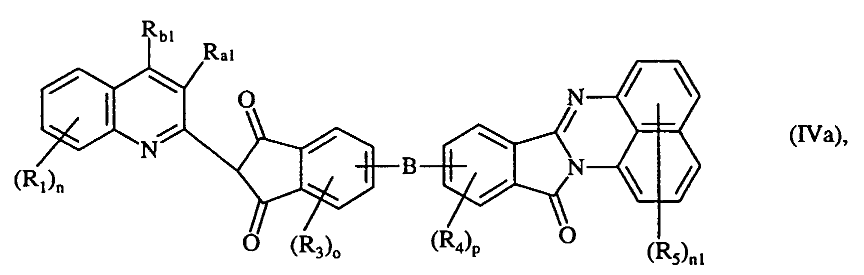 dans laquelle
Rₐ₁ et Rₐ₂ représentent chacun, indépendamment l'un de l'autre, H ou OH, et
R_{b1} et R_{b2} représentent chacun, indépendamment l'un de l'autre, H ou un halogène, plus spécialement F, Br ou Cl, et
n et n₁ représentent chacun, indépendamment l'un de l'autre, un nombre allant de 0 à 4,
R₁ représente un halogène, plus spécialement Cl ou Br, un groupe -COOH, -COOR dans lequel R représente un groupe alkyle en C₁-C₁₀, plus spécialement méthyle ou éthyle, aryle en C₆-C₁₀ ou cycloalkyle en C₅-C₈, ou alkyle en C₁-C₆, plus spécialement méthyle,
o et p représentent chacun, indépendamment l'un de l'autre, un nombre allant de 0 à 2, plus spécialement 0 ou 1,
R₃ et R₄, ayant des significations identiques ou différentes, représentent chacun, indépendamment l'un de l'autre, un groupe alkyle en C₁-C₆, plus spécialement méthyle, éthyle, n-propyle, isopropyle, n-, sec- ou tert-butyle, un halogène, plus spécialement Cl ou Br, un groupe alkyl- ou aryl-carbonyle, alkyl- ou aryl-sulfonyle, nitro, aryle, plus spécialement phényle éventuellement substitué, aryloxysulfonyle, plus spécialement -SO₂OC₆H₅, hydroxy, alcoxy en C₁-C₆ tel que méthoxy ou benzyloxy, aryloxy tel que phénoxy, amino lui-même éventuellement substitué par des groupes alkyle ou acyle, par exemple NH₂, NHCOCH₃ ou -N(C₂H₅)₂, aminosulfonyle lui-même éventuellement substitué par des groupes alkyle ou aryle, par exemple SO₂N(CH₃)₂ et SO₂NHCH₃, ou un noyau cycloaliphatique ou hétérocyclique condensé et
R₅ représente un groupe alkyle en C₁-C₆, un halogène, un groupe nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou un noyau cycloaliphatique ou hétérocyclique condensé, plus spécialement un halogène ou un groupe alkyle en C₁-C6.

14. Composés selon la revendication 13, répondant à la formule (IVb), ou leurs formes tautomères

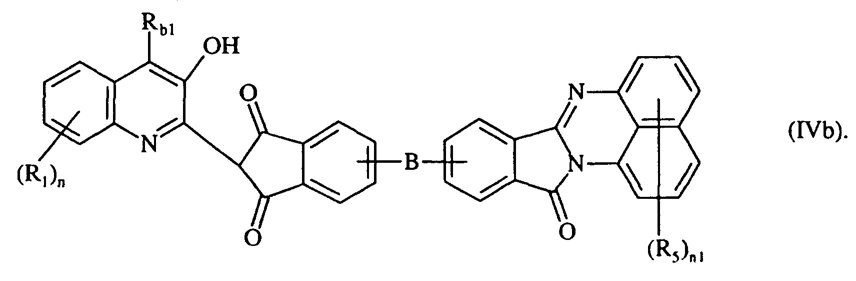

15. Procédé de préparation des composés de formule (I) selon la revendication 1 selon l'invention, **caractérisé en ce que** l'on condense des acides tétracarboxyliques ou leurs anhydrides de formule (V) 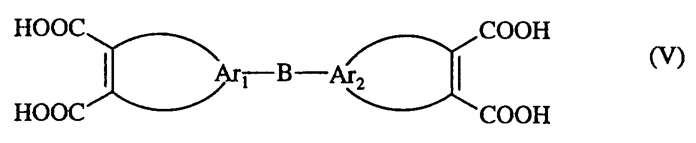 avec un ou plusieurs composés de formules (VI) et/ou (VII) 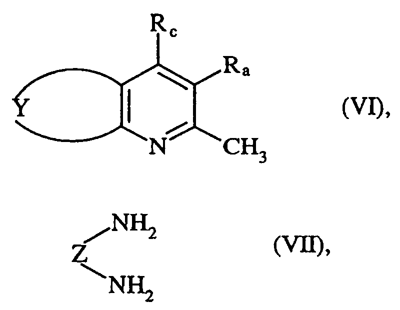 dans lesquelles
R_{c} représente H, COOH ou un halogène, plus spécialement F, Br ou Cl, en particulier H ou COOH et
Ar₁, Ar₂, B, Y, Z et Ra ont les significations indiquées dans la revendication 1, la somme des composés de formule (VI) et (VII) représentant deux équivalents molaires par rapport à l'acide tétracarboxylique (V).

16. Composés de formule (V) ou leurs anhydrides, 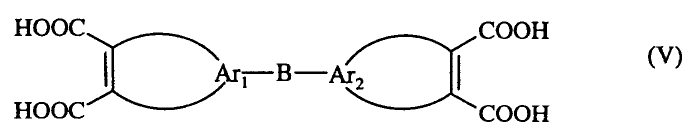 dans laquelle
Ar₁ et Ar₂ représentent chacun, indépendamment l'un de l'autre, un radical complétant un groupe aromatique homogène éventuellement substitué et
B représente un groupe de formules
-CH₂CH₂CH₂CH₂

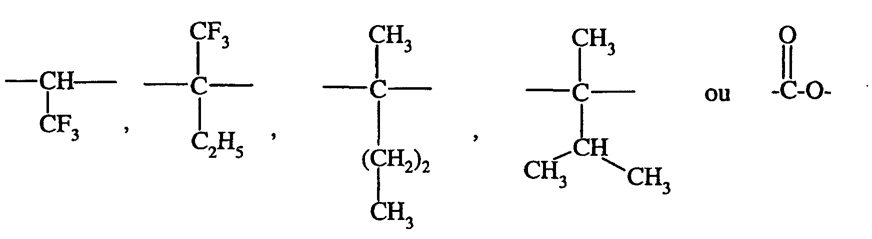

17. Utilisation d'un composé selon la revendication 1, pour la coloration de résines synthétiques dans la masse.

18. Résines synthétiques colorées par au moins un composé selon la revendication 1.
